(19) Europäisches Patentamt
European Patent Office
Office européen des brevets

(11) **EP 2 339 852 A1**

(12) **EUROPEAN PATENT APPLICATION**
published in accordance with Art. 153(4) EPC

(43) Date of publication:
**29.06.2011 Bulletin 2011/26**

(51) Int Cl.:
*H04N 7/30* (2006.01)　　　　*H04N 7/32* (2006.01)

(21) Application number: **09821804.3**

(22) Date of filing: **21.10.2009**

(86) International application number:
**PCT/JP2009/005524**

(87) International publication number:
**WO 2010/047104 (29.04.2010 Gazette 2010/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **22.10.2008 JP 2008271496**

(71) Applicant: **Nippon Telegraph And Telephone Corporation**
**Tokyo 100-8116 (JP)**

(72) Inventors:
• **MATSUO, Shohei**
**Musashino-shi**
**Tokyo 180-8585 (JP)**

• **TAKAMURA, Seishi**
**Musashino-shi**
**Tokyo 180-8585 (JP)**
• **KAMIKURA, Kazuto**
**Musashino-shi**
**Tokyo 180-8585 (JP)**
• **YASHIMA, Yoshiyuki**
**Musashino-shi**
**Tokyo 180-8585 (JP)**

(74) Representative: **Ilgart, Jean-Christophe et al**
**BREVALEX**
**95 rue d'Amsterdam**
**75378 Paris Cedex 8 (FR)**

(54) **DEBLOCKING METHOD, DEBLOCKING DEVICE, DEBLOCKING PROGRAM, AND COMPUTER-READABLE RECORDING MEDIUM CONTAINING THE PROGRAM**

(57)　　A direction is detected for each block in which a pixel value is changed which is represented by an edge that indicates a direction of change in pixel value in each block, a direction in which a deblocking filter is to be applied to a block boundary is determined based on a direction of an edge detected for a block to be processed which includes the block boundary subject to deblocking and on a direction of an edge detected for a block contacting the block to be processed, and the deblocking filter is applied to the block boundary in accordance with the determined direction.

FIG. 4

**Description**

TECHNICAL FIELD

The present invention relates to a deblocking method used in a video coding apparatus and a video decoding apparatus that implement predictive coding on a block basis, an apparatus thereof, a deblocking program used for realizing the deblocking method, and a computer-readable recording medium recorded with the program.
Priority is claimed on Japanese Patent Application No. 2008-271496, filed October 22, 2008, the content of which is incorporated herein by reference.

BACKGROUND ART

In the video coding, the inter-predictive coding (motion compensation) for performing a prediction between different frames uses a decoded picture as a reference picture. For this reason, when coding is performed at a low bit rate, block distortion occurs which deteriorates the decoded picture, and thus there is a problem in that the deterioration in picture quality is propagated because the deteriorated picture is referenced.
Therefore, an in-loop filter for decreasing block distortion is proposed and introduced for video coding standards. Also, even in ISO (International Organization for Standardization) MPEG (Moving Picture Experts Group) and ITU-T (International Telecommunications Union - Telecommunication Standardization Sector) VCEG (Video Coding Experts Group), many proposals have been made and are now actively discussed in relation to filters including pre-filters and post-filters as well as in-loop filters. Unlike pre-filters and post-filters, if an in-loop filter is used, the picture quality of the filtered picture is improved and the influence on the subsequent frames referring to the picture is also improved, thereby enabling the improvement in the picture quality of the entire video (the improvement in the coding efficiency). For this reason, the improvement of in-loop filters is greatly anticipated.
In current video coding standards such as MPEG-1, MPEG-2, MPEG-4, H.261, H.262, and H.264, when video information is coded, a picture is divided into M×N blocks (M and N are multiples of 2, for example, 4, 8, or 16) and then coded. After the division, a difference between a block to be processed and a reference block (a decoded block) is obtained within a frame or between frames, a residual signal is subjected to orthogonally transform, quantization is performed, and entropy coding is applied, and a resultant signal is output as binary data.
Taking advantage of the fact that the visual characteristics of a human are insensitive to high frequency, when quantization is performed, high frequency components of a picture are removed. At this time, since the high frequency components are removed block by block, the boundaries of blocks stand out in a decoded picture, and block noise is superposed thereon. In particular, if a coding amount allocated to video is small (i.e., at a low bit rate), a high degree of block noise is observed.
In motion-compensation type inter-predictive coding, a residual signal between a reference frame in the past or future and a frame to be processed and a motion vector (movement amount) are transmitted to reduce redundancy in the temporal domain. In this motion-compensation type inter-predictive coding, when a referenced picture includes block-shaped noise and is thus being deteriorated, the residual signal, which is obtained by calculating a difference between the reference frame and the frame to be processed, is increased which results in deterioration in the coding efficiency.
Thus, in H.264/AVC, when a reference frame, that is, a decoded picture, is stored in a frame memory, a filter for reducing block noise generated at coding is used. This filter is called a deblocking filter.
It is to be noted that the above description is disclosed in pp. 140-144 and p. 269 of the Non-Patent Document 1 stated below.

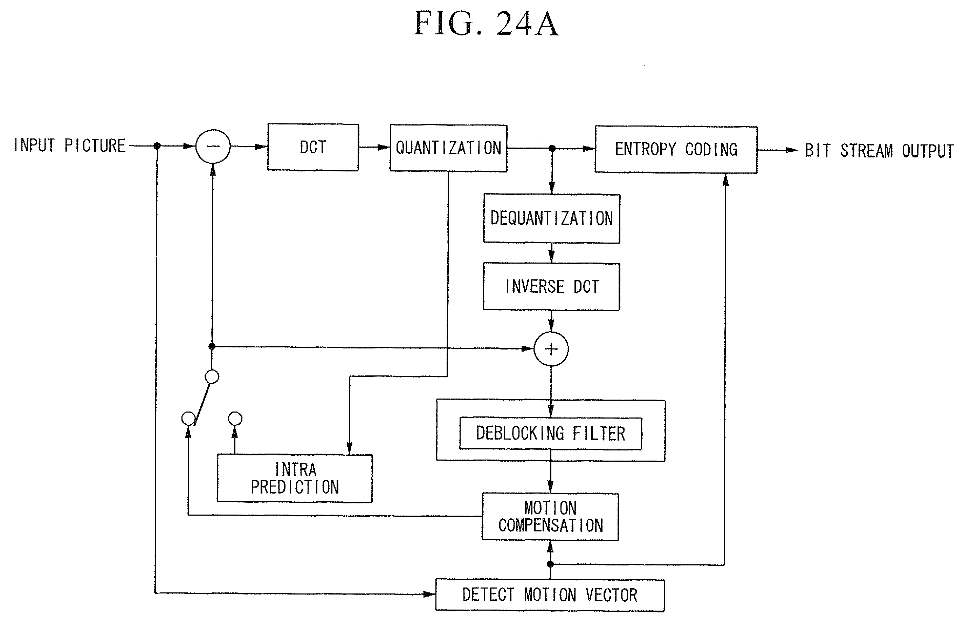

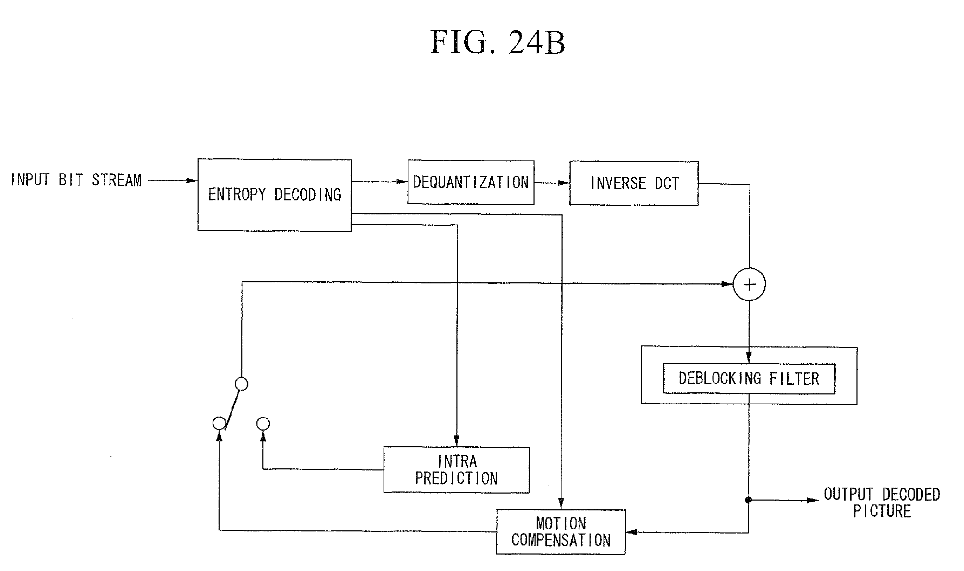

FIG. 24A shows a location of the deblocking filter in a coding process, and FIG. 24B shows a location of the deblocking filter in a decoding process.
The process of the deblocking filter is applied to each block boundary of 16 blocks (4x4) that are obtained by dividing one macro block (hereinafter, abbreviated as MB). Also, in the case of an MB boundary, if an adjacent MB is present, pixels required for the filter can be obtained, and thus the same process is applied thereto.

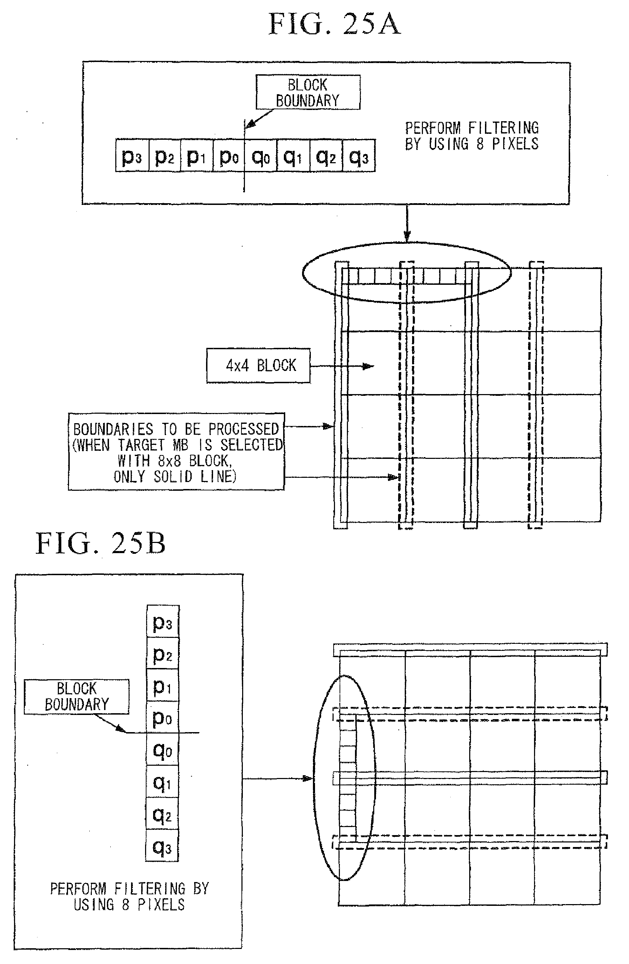

FIGS. 25A and 25B show specific locations to be processed. Here, FIG. 25A shows a location of a filter with respect to a block boundary in the vertical direction. Also, FIG. 25B shows a location of a filter with respect to a block boundary in the horizontal direction. It is noted that only portions indicated by solid lines are basically processed if an MB to be processed is treated as 8×8 blocks of a luminance signal, while both portions indicated by solid and dotted lines are processed if an MB to be processed is treated as 4x4 blocks of a luminance signal and a chrominance signal.
It is to be noted that the above description is disclosed in pp. 182-193 of the Non-Patent Document 2 stated below.
Depending on the characteristics of a picture, there is a location where block distortion is easily generated and a location where block distortion is not easily generated, and thus the process of the deblocking filter is applied adaptively. Specifically, the process is changed in accordance with the following conditions.

· A boundary strength (Bs value)
· The absolute value of a difference between pixels at a boundary The boundary strength is defined in the following table 1.

[Table 1]

| At least one of two blocks is intra coded (intra mode) and is at an MB boundary. | Bs=4 |
|---|---|
| Either one of two blocks is in an intra mode, but not at the MB boundary. | Bs=3 |
| No block is in an intra mode, and either one of the blocks has an orthogonal transform coefficient. | Bs=2 |
| Neither is in an intra mode, neither has a transform coefficient, reference frames are different, the numbers of the reference frames are different, and the motion vector values are different. | Bs=1 |
| Neither is in an intra mode, neither has a transform coefficient, and the reference frames and the motion vector values are identical. | Bs=0 |

As also shown in FIGS. 25A and 25B, assuming that a pixel value of one block is $p_m$ ($0 \leq m < 4$: the closer to a block boundary the location is, the smaller the value of the subscript is), and a pixel value of another block is $q_n$ ($0 \leq n < 4$: the closer to a block boundary a location is, the smaller the value of the subscript is), the deblocking filter is operated if the following two conditions are satisfied.

1.

$$Bs > 0$$

2.

$$|p_0 - q_0| < \alpha \ \&\& \ |p_1 - p_0| < \beta \ \&\& \ |q_1 - q_0| < \beta$$

Here, $\alpha$ and $\beta$ are determined uniquely depending on a quantization parameter (QP) that is set at coding. Also, a user can also adjust $\alpha$ and $\beta$ by using of two parameters of a slice_alpha_c0_offset_div2 flag and a slice_beta_offset_div2 flag included in a slice header.

Furthermore, in addition to the above two parameters, the deblocking filter can be controlled in three levels as shown below by means of two parameters, that is, deblocking_filter_control_present_flag and disable_deblocking_filter_idc in the picture parameter set (a header portion)

1. The deblocking filter is applied to block boundaries and MB boundaries.
2. The deblocking filter is applied only to MB boundaries.
3. The deblocking filter is not applied.

It is to be noted that although they are not relevant to the deblocking filter, various schemes are proposed for improving the performance of intra prediction. The present inventors also propose a scheme for improving the performance of intra prediction by assigning weights in accordance with a texture in a picture and then making a prediction (see the Non-Patent Document 3).

Prior Art Documents

Non-Patent Documents

Non Patent Document 1: Sakae Okubo, Shinya Kadono, Yoshihiro Kikuchi, Teruhiko Suzuki, "Revised edition H. 264/AVC textbook", Impress, 2006
Non Patent Document 2: ITU-T Study Group 16-Questions 6/16: "Draft new Corrigendum 1 to H. 264 Advanced video coding for generic audiovisual services", 2005
Non Patent Document 3: Shohei Matsuo, Seishi Takamura, Kazuto Kamikura, Yoshiyuki Yashima: "A Study on weighted intra prediction", Picture Coding Symposium Japan, PCSJ2007

SUMMARY OF INVENTION

Problem to be Solved by the Invention

In a conventional deblocking filter, pixels in the direction (90°) perpendicular to a block boundary are always used, and the filter is adaptively applied in accordance with two conditions, that is, (i) a boundary strength and (ii) the absolute value of a difference between selected pixels.

However, since only pixels in the perpendicular direction are handled in the conventional technique, if a picture to be coded has the texture in an intrinsic aslant direction (for example, an aslant pattern or line), there is a possibility that the texture becomes obscure.

In other words, although the process of the conventional deblocking filter is adaptively applied, it has no processing mechanism in consideration of the direction of a texture originally included in a picture. For this reason, in the conventional technique, the filter is applied even to a texture that should essentially be preserved, and thus there is a possibility that an aslant texture component is smoothed, thereby deteriorating the subjective picture quality.

The present invention has been made in consideration of such circumstances, and an object thereof is to provide a novel deblocking technique in which textures in aslant directions, which should be preserved in a picture, are preserved and block noise can be efficiently reduced. Also, as a result, an object thereof is not only to improve the subjective picture quality of a single picture but also to improve the performance of inter-predictive coding by referring to a picture with an improved picture quality so that coding efficiency of the entire video information can be improved.

Means for Solving the Problems

In order to accomplish the objects, the deblocking method in accordance with the present invention is a deblocking method for reducing block distortion occurring in a video coding scheme for performing predictive coding on a block basis and in a video decoding scheme for decoding video coded by the video coding scheme, and the method includes: a detection step of detecting, for each block, a direction in which a pixel value is changed which is represented by an edge that indicates a direction of change in pixel value in each block; a determination step of determining a direction in which a deblocking filter is to be applied to a block boundary, based on a direction of an edge detected for a block to be processed which includes the block boundary subject to deblocking and on a direction of an edge detected for a block contacting the block to be processed; and a filtering step of applying the deblocking filter to the block boundary in accordance with the determined direction.

In the deblocking method in accordance with the present invention, for each block, the detection step may detect a component in the horizontal direction of a change in pixel value in each block, may detect a component in the vertical direction of a change in pixel value in each block, and may detect the direction of the edge based on the detected component in the horizontal direction and the detected component in the vertical direction.

In the deblocking method in accordance with the present invention, for each block, the detection step may obtain information on a prediction mode which is used when intra coding of each block is performed, and may detect the direction of the edge based on the obtained information on the prediction mode.

The deblocking method in accordance with the present invention may further include a calculation step of calculating, for each block, the strength of the edge based on the detected component in the horizontal direction and the detected component in the vertical direction, wherein the determination step may compare the strength of the edge calculated for the block to be processed with a predetermined threshold value, and, when the strength of the edge is lower than or equal to the predetermined threshold value, may change the direction in which the deblocking filter is to be applied, which is determined based on the direction of the edge, to a direction orthogonal to the block boundary.

In the deblocking method in accordance with the present invention, when the information on the prediction mode for the block to be processed represents a prediction mode using a pixel average value as a predictive signal, the determination step may change the direction in which the deblocking filter is to be applied, which is determined based on the direction of the edge, to a direction orthogonal to the block boundary.

In the deblocking method in accordance with the present invention, the determination step may determine the direction in which the deblocking filter is to be applied by referring to data stored in a storage means that stores information which describes a correlation among the direction of the edge of the block to be processed, the direction of the edge of the block contacting the block to be processed, and the direction in which the deblocking filter is to be applied, using the direction of the edge detected for the block to be processed and the direction of the edge detected for the block contacting the block to be processed as a key.

The deblocking apparatus in accordance with the present invention is a deblocking apparatus for reducing block distortion occurring in a video coding scheme for performing predictive coding on a block basis and in a video decoding scheme for decoding video coded by the video coding scheme, and the apparatus includes: a detection means for detecting, for each block, a direction in which a pixel value is changed which is represented by an edge that indicates a direction of change in pixel value in each block; a determination means for determining a direction in which a deblocking filter is to be applied to a block boundary, based on a direction of an edge detected for a block to be processed which includes the block boundary subject to deblocking and on a direction of an edge detected for a block contacting the block to be processed; and a filtering means for applying the deblocking filter to the block boundary in accordance with the determined direction.

The deblocking apparatus in accordance with the present invention may further include a storage means for storing information which describes a correlation among the direction of the edge of the block to be processed, the direction of the edge of the block contacting the block to be processed, and the direction in which the deblocking filter is to be applied, wherein the determination means determines the direction in which the deblocking filter is to be applied, by referring data stored in the storage means using the direction of the edge detected for the block to be processed and the direction of the edge detected for the block contacting the block to be processed as a key.

The deblocking program in accordance with the present invention is a deblocking program for executing the above deblocking methods in a computer.

The computer-readable recording medium in accordance with the present invention is a computer-readable recording medium in which a deblocking program for executing the above deblocking methods in a computer is recorded.

Advantageous Effects of the Invention

As described above, in terms of a picture having a lot of edges in aslant directions, which are not preserved by conventional deblocking filters and which are considered as causing the deterioration in the picture quality, the present invention can reduce block noise present at a block boundary while preserving textures in aslant directions, which should be preserved. Thus, an improvement in the subjective picture quality can be realized.

In addition, in accordance with the present invention, a decoded picture has a high picture quality, and thus the present invention can decrease a residual signal in the inter-predictive coding that refers to the picture; as a result, an improvement in the coding efficiency can be realized.

BRIEF DESCRIPTION OF THE DRAWINGS

FIG. 1 is an explanatory diagram illustrating basic principles of the present invention.
FIG. 2 is an explanatory diagram of an edge direction.
FIG. 3 is a block diagram showing a deblocking apparatus in accordance with a first embodiment of the present invention.
FIG. 4 is a flowchart executed by the deblocking apparatus in accordance with the first embodiment.
FIG. 5 is a flowchart executed by the deblocking apparatus in accordance with the first embodiment.
FIG. 6 is a flowchart executed by the deblocking apparatus in accordance with the first embodiment.
FIG. 7 is a flowchart executed by the deblocking apparatus in accordance with the first embodiment.
FIG. 8 is a flowchart executed by the deblocking apparatus in accordance with the first embodiment.
FIG. 9 is a flowchart executed by the deblocking apparatus in accordance with the first embodiment.
FIG. 10 is an explanatory diagram of a detection process of an edge direction.
FIG. 11 is an explanatory diagram of a detection process of an edge direction.
FIG. 12 is an explanatory diagram of edge types that classify edge directions.
FIG. 13 is an explanatory diagram illustrating a process of determining filtered pixels.
FIG. 14A is an explanatory diagram illustrating a process of determining filtered pixels.
FIG. 14B is an explanatory diagram illustrating a process of determining filtered pixels.
FIG. 14C is an explanatory diagram illustrating a process of determining filtered pixels.
FIG. 14D is an explanatory diagram illustrating a process of determining filtered pixels.
FIG. 14E is an explanatory diagram illustrating a process of determining filtered pixels.
FIG. 15A is an explanatory diagram illustrating a process of determining filtered pixels.
FIG. 15B is an explanatory diagram illustrating a process of determining filtered pixels.

FIG. 15C is an explanatory diagram illustrating a process of determining filtered pixels.

FIG. 15D is an explanatory diagram illustrating a process of determining filtered pixels.

FIG. 15E is an explanatory diagram illustrating a process of determining filtered pixels.

FIG. 15F is an explanatory diagram illustrating a process of determining filtered pixels.

FIG. 15G is an explanatory diagram illustrating a process of determining filtered pixels.

FIG. 16 is an explanatory diagram illustrating a process of determining filtered pixels.

FIG. 17A is an explanatory diagram illustrating a process of determining filtered pixels.

FIG. 17B is an explanatory diagram illustrating a process of determining filtered pixels.

FIG. 17C is an explanatory diagram illustrating a process of determining filtered pixels.

FIG. 17D is an explanatory diagram illustrating a process of determining filtered pixels.

FIG. 17E is an explanatory diagram illustrating a process of determining filtered pixels.

FIG. 17F is an explanatory diagram illustrating a process of determining filtered pixels.

FIG. 17G is an explanatory diagram illustrating a process of determining filtered pixels.

FIG. 18 is an explanatory diagram showing information stored in a filtered pixel determining information storage unit.

FIG. 19A is an explanatory diagram showing the results of an experiment executed in order to verify the effectiveness of the first embodiment of the present invention.

FIG. 19B is an explanatory diagram showing the results of an experiment executed in order to verify the effectiveness of the first embodiment of the present invention.

FIG. 20 is a block diagram showing a deblocking apparatus in accordance with a second embodiment of the present invention.

FIG. 21 is a flowchart executed by the deblocking apparatus in accordance with the second embodiment.

FIG. 22 is a flowchart executed by the deblocking apparatus in accordance with the second embodiment.

FIG 23 is a flowchart executed by a deblocking apparatus in accordance with a third embodiment.

FIG. 24A is an explanatory diagram showing a location at which a deblocking filter is implemented in a coding process.

FIG. 24B is an explanatory diagram showing a location at which a deblocking filter is implemented in a decoding process.

FIG. 25A is an explanatory diagram showing a location of the deblocking filter with respect to a block boundary in the vertical direction.

FIG. 25B is an explanatory diagram showing a location of the deblocking filter with respect to a block boundary in the horizontal direction.

MODES FOR CARRYING OUT THE INVENTION

First, prior to describing embodiments of the present invention, a fundamental principle of a deblocking method, a deblocking apparatus, and a deblocking program to which the present invention is applied will be described. In the deblocking method, the deblocking apparatus, and the deblocking program, to which the present invention is applied, pixels are converted while adaptively changing the direction of a filter in accordance with the direction of a texture included in a picture, in addition to the direction perpendicular to a block boundary. As a result, it is possible to efficiently reduce block noise while preserving the texture inherent in the picture, so that it is possible to realize a deblocking filter that improves the subjective picture quality.

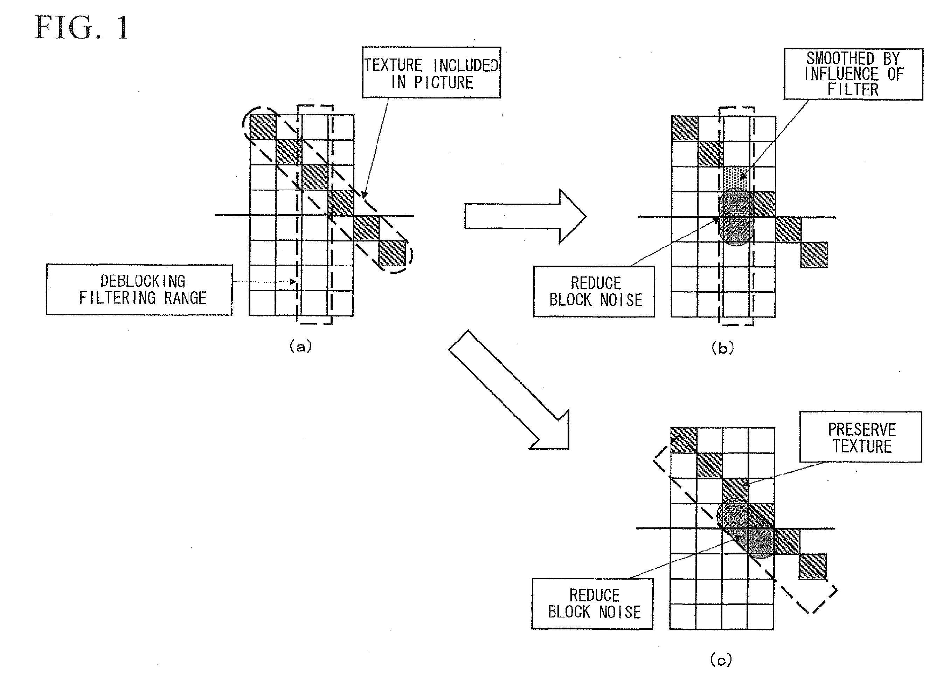

As shown in the portion (a) of FIG. 1, a block to be coded is assumed to have a texture in an aslant direction.

In this case, if a conventional deblocking filter is applied as shown in the portion (b) of FIG. 1, block noise at a block boundary can be reduced, but the aslant texture is also smoothed depending on circumstances, so that the texture may be influenced.

Thus, a filtering process is performed in an aslant direction in accordance with the direction of the texture as shown in the portion (c) of FIG. 1, so that block noise is reduced while the texture is preserved. As a result, improvement in the subjective picture quality can be realized, and a reduction of a residual signal can be realized when the processed picture is referenced, so that it is also possible to realize an improvement in the coding efficiency.

Then, the configuration of the deblocking apparatus for realizing the above will be described.

In order to realize reduction of block distortion occurring in a video coding scheme for performing predictive coding on a block basis and in a video decoding scheme for decoding the video coded by the video coding scheme, the deblocking apparatus includes (1) a detection means for detecting, for each block, the direction in which a pixel value is changed which is represented by an edge that indicates the direction of change in pixel value of each block, (2) a determination means for determining the direction in which a deblocking filter is applied to a block boundary, based on the edge direction detected for a block to be processed which has the block boundary subject to the deblocking and the edge direction detected for a block contacting the block to be processed (a block contacting the block to be processed in the upper, lower, right, left, and/or an aslant direction), and (3) a filtering means for applying the deblocking filter to the block boundary subject to the deblocking in accordance with the direction determined by the determination means.

Furthermore, a storage means may be provided for storing information which describes a correlation among the edge direction of the block to be processed, the edge direction of the block contacting the block to be processed, and the direction in which the deblocking filter is applied. In this case, the determination means refers to the data stored in the storage means by using the edge directions detected for the block to be processed and for the block contacting the block to be processed as a key, and determines the direction in which the deblocking filter is to be applied.

When employing this configuration, the detection means may detect, for each block, the component in the horizontal direction of a pixel value of each block and the component in the vertical direction of the change in pixel value of each block, and may detect the edge direction detected based on the detected components in the horizontal direction and in the vertical direction.

In this case, a calculation unit may be provided for calculating, for each block, the edge strength based on the components in the horizontal direction and in the vertical direction detected by the detection means. When the calculation means is provided, the determination means may compare the edge strength calculated for the block to be processed by the calculation means with a predetermined threshold value, and if the edge strength is lower than or equal to the predetermined threshold value, the direction in which the deblocking filter is to be applied, the direction being determined based on the edge direction detected by the detection means, may be changed to a direction orthogonal to the block boundary that is subject to the deblocking.

Also, when employing this configuration, the detection means may obtain, for each block, information on a prediction mode which is used when intra coding is performed to each block, and may detect the edge direction based on the obtained information on the prediction mode.

In this case, if the information on the prediction mode with respect to the block to be processed represents a prediction mode using an average pixel value as a prediction signal, the determination means may change the direction in which the deblocking filter is applied, the direction being determined based on the edge direction detected by the detection means, to a direction orthogonal to the block boundary that is subject to the deblocking.

The deblocking method realized by the operations of the above processing means can also be realized by a computer program. This computer program may be recorded in a suitable computer-readable medium or provided via a network, so that, when the deblocking method is implemented, the computer program is installed on a computer and operated by a control means such as CPU (Central Processing Unit) to realize the deblocking method.

By using this configuration, the deblocking filter can be applied even in an aslant direction with respect to the block boundary. As a result, block noise present at the block boundary can be reduced while preserving a texture in an aslant direction, which should be preserved, so that it is possible to realize an improvement in the subjective picture quality.

In addition, since the decoded picture has a high degree of quality, a residual signal can be decreased in inter-predictive coding that refers to this picture; as a result, an improvement in the coding efficiency can also be realized.

In contrast, a conventional deblocking filter is able to change pixels only in a direction perpendicular to a block boundary. Thus, when block noise present at the block boundary is smoothed, textures in aslant directions, which are originally included in a picture, become obscure, which may cause deterioration in the subjective picture quality.

Next, the present invention will be described in detail in accordance with embodiments thereof.

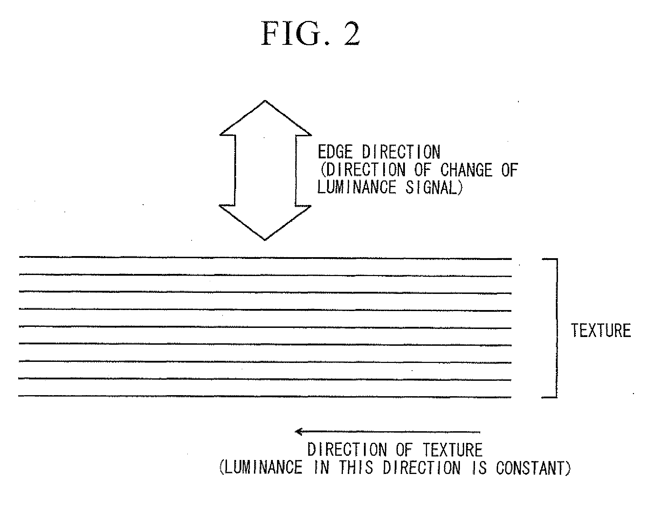

Hereinafter, "edge" in the present invention means a direction in which a luminance signal varies, and this direction is perpendicular to the direction of the texture, as shown in FIG. 2.

[First Embodiment]

First, a deblocking apparatus 1 in accordance with a first embodiment of the present invention will be described.

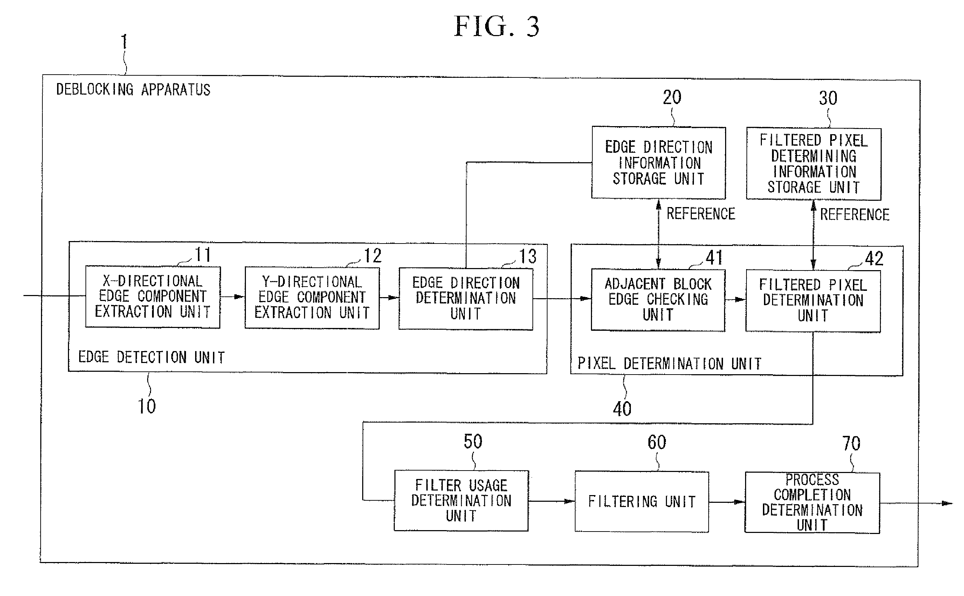

FIG. 3 illustrates a configuration of the deblocking apparatus 1 in accordance with the first embodiment of the present invention.

The deblocking apparatus 1 is implemented in a video coding apparatus and a video decoding apparatus, as shown in FIGS. 24A and 24B. As shown in FIG. 3, the deblocking apparatus 1 in accordance with the present embodiment includes an edge detection unit 10 for extracting edge components in a block used by a pixel determination unit 40 and detecting a direction of an edge in the block; an edge direction information storage unit 20 for storing the detection result of the edge detection unit 10; a filtered pixel determining information storage unit 30 for storing information used for the determination of pixels (filtered pixels) which are to be processed by the deblocking filter; a pixel determination unit 40 for determining pixels to be actually filtered based on the edge direction detected by the edge detection unit 10 by referring to the information stored in the edge direction information storage unit 20 and the filtered pixel determining information storage unit 30; a filter usage determination unit 50 for determining whether or not to use the filtering, using the pixels determined by the pixel determination unit 40; a filtering unit 60 for filtering the pixels determined by the pixel determination unit 40; and a process completion determination unit 70 for determining whether or not to complete the process by determining a final block boundary of an MB.

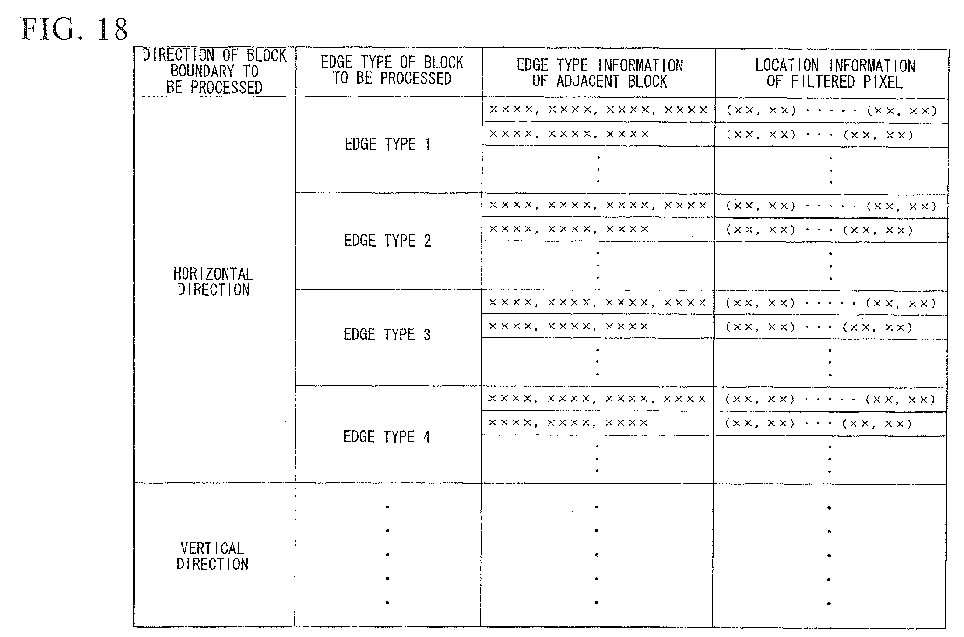

It is to be noted that the information used for determining the filtered pixels, stored in the filtered pixel determining information storage unit 30, will be described in detail with reference to FIG. 18.

As shown in FIG. 3, the edge detection unit 10 includes an x-directional edge component extraction unit 11 for extracting an edge component in the horizontal direction of each block in the MB, a y-directional edge component extraction unit 12 for extracting an edge component in the vertical direction of each block in the MB, and an edge direction determination unit 13 for determining an edge direction of each block by using the edge components extracted by the x-directional edge component extraction unit 11 and the y-directional edge component extraction unit 12 and storing the edge direction in the edge direction information storage unit 20.

Also, as shown in FIG. 3, the pixel determination unit 40 includes an adjacent block edge checking unit 41 for checking an edge direction relating to each block boundary in the MB by referring to the information stored in the edge direction information storage unit 20, and a filtered pixel determination unit 42 for determining pixels which is to be processed by the deblocking filter based on the edge direction checked by the adjacent block edge checking unit 41 by referring to the information stored in the filtered pixel determining information storage unit 30.

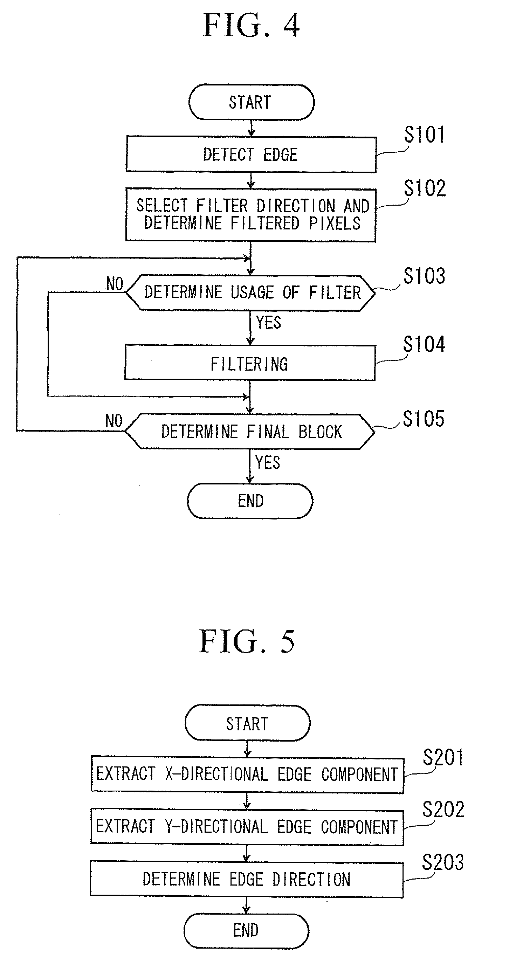

FIGS. 4 to 9 illustrate an example of flowcharts that are executed when the deblocking apparatus 1 of the present embodiment configured as above processes 4×4 block boundaries in one MB.

Next, the process executed by the deblocking apparatus 1 of the present embodiment will be described in detail in accordance with these flowcharts.

It is to be noted that, hereinafter, the block size is 4x4, and a processing target is a luminance signal, unless otherwise stated. In addition, four directions (horizontal (0°), vertical (90°), and aslant (45° and 135°) are assumed as the edge directions.

[1] Flowcharts executed by the present embodiment

[1-1] Overall flowchart

FIG. 4 illustrates an overall flowchart showing a series of processes executed by the deblocking apparatus 1 of the present embodiment.

Here, the following process is executed in the unit of an MB so as to apply it to MBs included in a picture, one by one.

As shown in the flowchart of FIG. 4, in the step S101, the deblocking apparatus 1 of the present embodiment first detects directions of all edges of sixteen 4×4 blocks in an MB, and stores information thereon in the edge direction information storage unit 20. The detection method of the edge directions will be described later in the steps S201 to S203 (see the flowchart of FIG. 5).

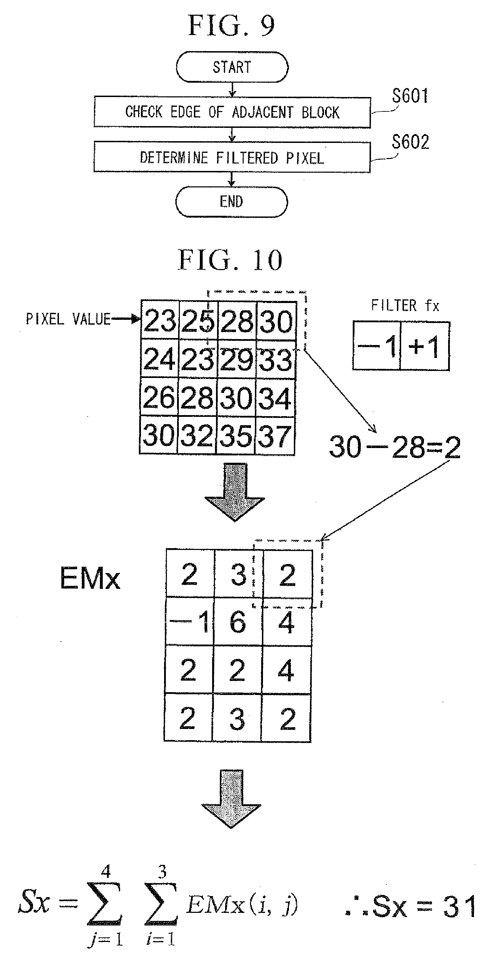

Subsequently, in the step S102, a filtering direction is selected based on the edge directions obtained in the step S101. After the filtering direction is selected, 8 pixels required for the process by the deblocking filter are designated. The method for selecting the filtering direction and designating the pixels will be described in detail later in the steps S601 and S602 (see the flowchart of FIG. 9).

Subsequently, in the step S103, one non-selected block is selected, and it is determined whether or not the deblocking filter should be used for the selected block. Conventional determination conditions defined in the H.264/AVC are used for this determination. If the filter should be used, the processing proceeds to the step S104. If the filter should not be used, in order to process the next block, the processing proceeds to the step S105 for determining whether or not the location to be processed has reached a final block.

Subsequently, in the step S104, a filtering process is actually executed by using the 8 pixels selected in the step S102.

Subsequently, in the step S105, it is determined whether or not the next block is to be processed. If the processed block is not a final block, the next block is to be processed, so that the processing returns to the step S103. If the final block is processed, the processing is completed.

[1-2] Details of the process in the step S10 1

[1-2-1] Overall process of the step S101

Next, the details of the process executed in the step S101 will be described in accordance with the flowchart of FIG. 5.

Upon entry into the process in the step S101 shown in the flowchart of FIG. 4, in the step S201, the deblocking apparatus 1 of the present embodiment first extracts an edge component in an x-direction (the horizontal direction) as shown in the flowchart of FIG. 5. Subsequently, in the step S202, an edge component in a y-direction (the vertical direction) is extracted. Subsequently, in the step S203, a direction of an edge included in a block is determined based on the edge components of the respective directions, obtained in the steps S201 and S202.

Next, the details of the processes in the steps S201, S202, and S203 will be described in order.

[1-2-2] Details of the process in the step S201

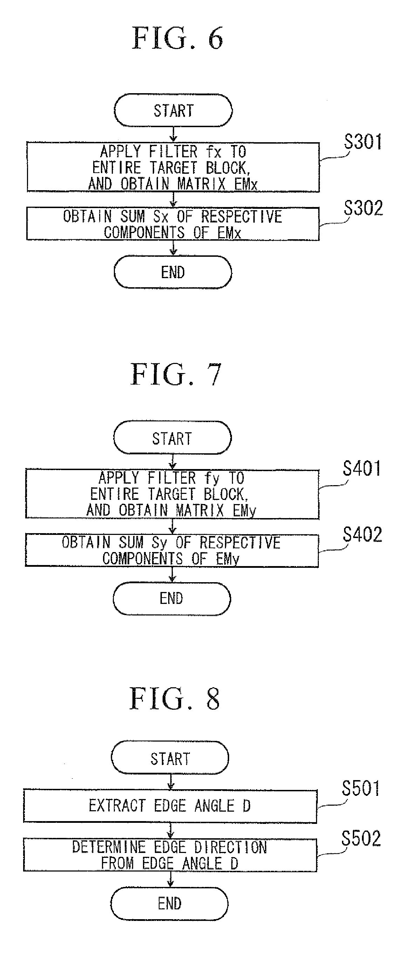

Details of the process executed in the step S201 will be described in accordance with the flowchart of FIG. 6.
Upon entry into the process in the step S201 shown in the flowchart of FIG. 5, in the step S301, the deblocking apparatus 1 of the present embodiment first applies a filter fx={-1, 1} (see FIG. 10) to a target block in the horizontal direction, and an obtained matrix is defined as an edge matrix x (EMx) (see FIG. 10) as shown in the flowchart of FIG. 6.
Subsequently, in the step S302, a sum of the components of EMx, which is obtained in the step S301, is calculated. This value is referred to as Sx. Sx represents an edge component in the horizontal direction, wherein a plus value means that a luminance value tends to increase from the left side to the right side, and a minus value means that a luminance value tends to decrease from the left side to the right side.
FIG. 10 is a diagram showing the concept of the process executed in the step S201. In FIG. 10, each element value of the edge matrix x (EMx) having a $4\times4$ block size is referred to as EMx(i, j), where i is an integer greater than or equal to 1 and represents a location in the x direction, and j is an integer greater than or equal to 1 and represents a location in the y direction. As shown in FIG. 10, for example, as a component of EMx, 30-28=2 is obtained by applying the filter fx={-1, +1} to two pixels having pixel values of 28 and 31. Also, as Sx, 31 is obtained by calculating a sum of 12 components of EMx.

[1-2-3] Details of the process in the step S202

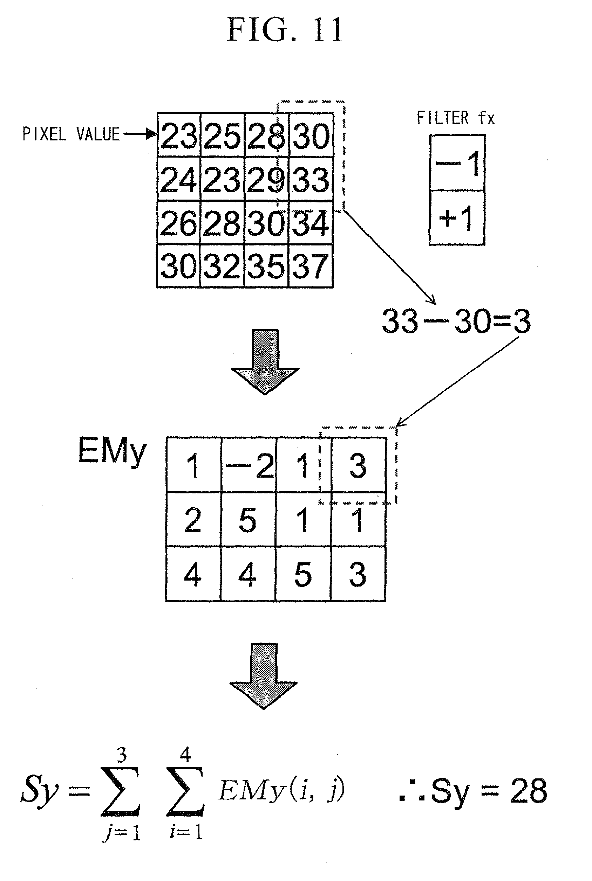

Details of the process executed in the step S202 will be described in accordance with the flowchart of FIG. 7.
Upon entry into the process of the step S202 in the flowchart of FIG. 5, in the step S401, the deblocking apparatus 1 of the present embodiment first applies a filter fy={-1, 1} (see FIG. 11) to a target block in the vertical direction, and an obtained matrix is defined as an edge matrix y (EMy) (see FIG. 11) as shown in the flowchart of FIG. 7.
Subsequently, in the step S402, a sum of the components of EMy, which are obtained in the step S401, is calculated. This value is referred to as Sy. Sy represents an edge component in the vertical direction, wherein a plus value means that a luminance value tends to increase from the top to the bottom, and a minus value means that a luminance value tends to decrease from the top to the bottom.
FIG. 11 is a diagram showing the concept of the process executed in the step S202. In FIG. 11, each element value of the edge matrix y (EMy) having a $4\times4$ block size is referred to as EMy(i, j), where i is an integer greater than or equal to 1 and represents a location in the x direction, and j is an integer greater than or equal to 1 and represents a location in the y direction. As shown in FIG. 11, for example, as a component of EMy, 33-30=3 is obtained by applying the filter fy={-1, +1} to two pixels having pixel values of 30 and 33. Also, as Sy, 28 is obtained by calculating a sum of 12 components of EMy.

[1-2-4] Details of the process in the step S203

Details of the process executed in the step S203 are described in accordance with the flowchart of FIG. 8.
Upon entry into the process of the step S203 in the flowchart of FIG. 5, in the step S501, the deblocking apparatus 1 of the present embodiment first applies Sx obtained in the step S302 and Sy obtained in the step S402 to the following equation to obtain an angle D of an edge included in a block, as shown in the flowchart of FIG. 8.

$$D=Sy/Sx$$

Subsequently, in the step S502, an edge direction is determined based on the edge angle D obtained in the step S501. For example, when there are four edge directions, the edge direction (an edge type) is determined in accordance with the classification of the following table 2.
[Table 2]

| Range of D | Edge type |
|---|---|
| $D\leq-2.414$ | 3 |
| $-2.414<D\leq-0.414$ | 4 |
| $-0.414<D\leq0.414$ | 1 |
| $0.414<D\leq2.414$ | 2 |

(continued)

| Range of D | Edge type |
|---|---|
| 2.414<D | 3 |

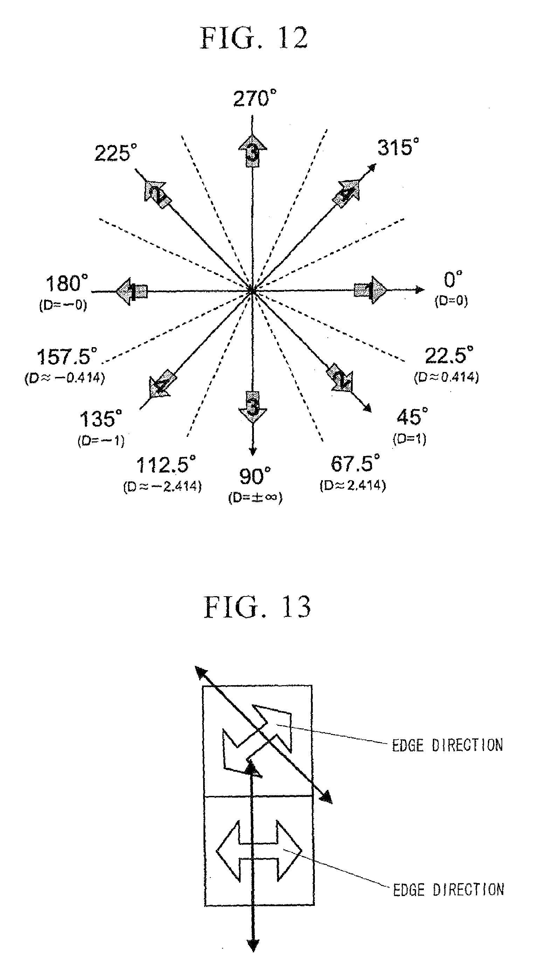

As shown in FIG. 12, "D=0. 414" means that the edge angle D is 22.5° (derived from tan 22.5° ≈ 0.414), "D=2.414" means that the edge angle D is 67.5° (derived from tan 67.5° ≈ 2.414), "D=-2.414" means that the edge angle D is 112.5° (derived from tan 112.5 ° ≈ -2.414), and "D=-0.414" means that the edge angle D is 157.5° (derived from tan 157.5° ≈ -0.414).

Therefore, the edge type 3 represented by "D≤-2.414, 2.414<D" shown in the table 2 means that the edge angle D is in a range of 67.5° to 112.5° (247.5° to 292.5°) (representative angles are 90° and 270°) as shown in FIG. 12. Also, the edge type 4 represented by "-2.414<D≤-0.414" shown in the table 2 means that the edge angle D is in a range of 112.5° to 157.5° (292.5° to 337.5°) (representative angles are 135° and 315°) as shown in FIG. 12. In addition, the edge type 1 represented by "-0.414<D≤0.414" shown in the table 2 means that the edge angle D is in a range of 157.5° to 202.5° (337.5° to 22.5°) (representative angles are 0° (=360°) and 180°) as shown in FIG. 12. Also, the edge type 2 represented by "0.414<D≤2.414" shown in the table 2 means that the edge angle D is in a range of 22.5° to 67.5° (202.5° to 247.5°) (representative angles are 45° and 225°) as shown in FIG. 12.

For example, in accordance with the classification of the table 2, in the blocks illustrated in FIGS. 10 and 11, since Sx=31 and Sy=28, D=0.90 is obtained, and thus the edge type thereof is determined as the edge type 2 having representative angles of 45° and 225° in accordance with the process of the step S502.

[1-3] Details of the process in the step S102

Next, the details of the process executed in the step S102 will be described in accordance with the flowchart of FIG. 9.

Upon entry into the process of the step S102 in the flowchart of FIG. 4, as shown in the flowchart of FIG. 9, in the step S601, the deblocking apparatus 1 of the present embodiment first obtains information on edge directions with respect to all blocks in the MB, obtained in the step S101, by referring to the information stored in the edge direction information storage unit 20 shown in FIG. 3, and checks, at each block interface, a direction in which the filter is to be applied.

Subsequently, in the step S602, 8 pixels to be processed (filtered pixels) are determined along the filtering direction checked in the step S601.

As shown in FIG. 13, the pixels to be processed (filtered pixels) are basically determined by selecting pixels arranged in a straight line orthogonal to the edge direction. In other words, since it is estimated that a texture (a line or the like) of a picture is present in a direction perpendicular to the edge, the filtered pixels are selected so that the filter is applied along the direction.

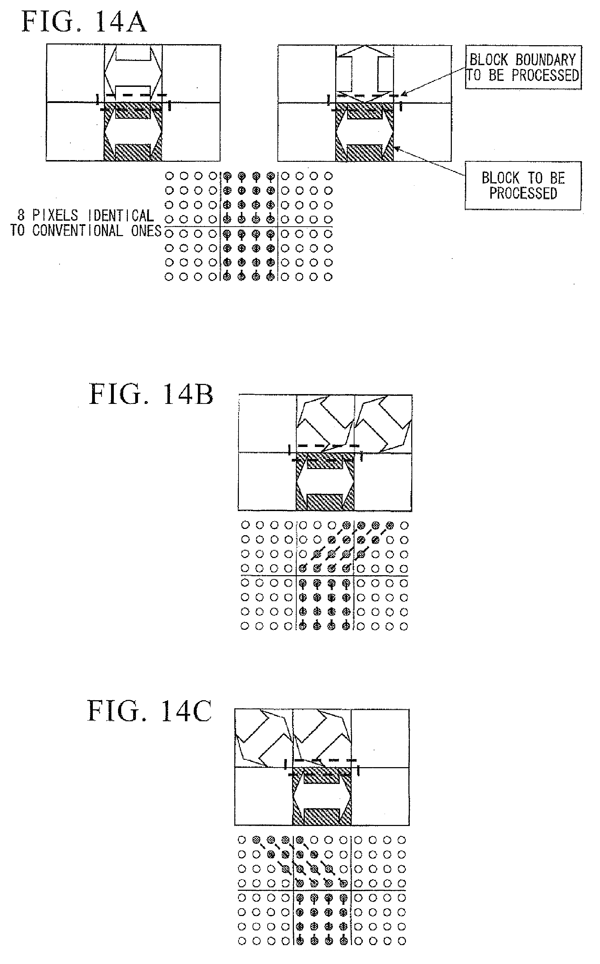

Then, FIGS. 14A to 17G illustrate specific examples to show how 8 filtered pixels are determined in accordance with the edge direction in a block to be processed and the edge direction in a block located around the block, when a block boundary in the horizontal direction is to be processed.

The specific examples shown in FIGS. 14A to 14E describe how 8 filtered pixels are determined in accordance with the edge direction in a block located around the block when the edge direction of a block to be processed is the edge type 1.

In other words, when the edge direction of the block to be processed is the edge type 1 and when the edge direction of a block adjacent to the block to be processed in the upper direction is the edge type 1 or the edge type 3, as shown in FIG. 14A, 8 filtered pixels are determined in the same manner as in the conventional technique.

Here, at this time, when the edge direction of the block adjacent to the block to be processed in the upper direction is the edge type 3, the filtered pixels are not selected in accordance with the basic configuration shown in FIG. 13 because pixels lined in the horizontal direction cannot be selected. Thus, in this case, 8 filtered pixels are determined in the same manner as in the conventional technique.

Also, when the edge direction of the block to be processed is the edge type 1, the edge direction of a block adjacent to the block to be processed in the upper direction is the edge type 2, and the edge direction of a block adjacent to the block to be processed in the upper-right direction is the edge type 2, 8 filtered pixels are determined in accordance with the manner as shown in FIG. 14B.

In addition, when the edge direction of the block to be processed is the edge type 1, the edge direction of a block adjacent to the block to be processed in the upper direction is the edge type 4, and the edge direction of a block adjacent to the block to be processed in the upper-left direction is the edge type 4, 8 filtered pixels are determined in accordance with the manner as shown in FIG. 14C.

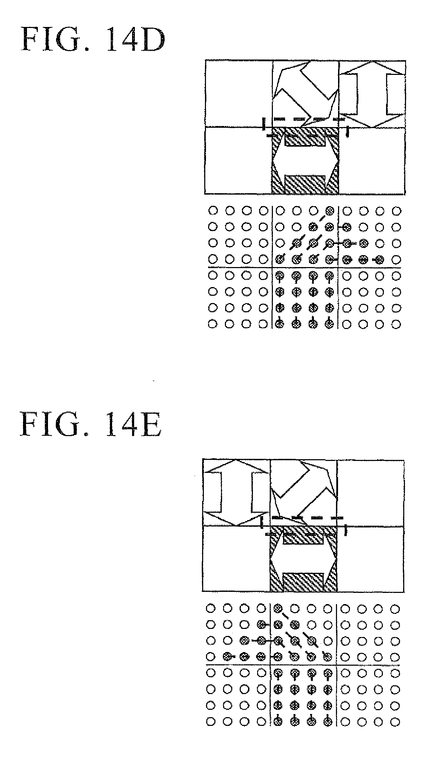

Also, when the edge direction of the block to be processed is the edge type 1, the edge direction of a block adjacent to the block to be processed in the upper direction is the edge type 2, and the edge direction of a block adjacent to the block to be processed in the upper-right direction is the edge type 3, 8 filtered pixels are determined in accordance with the manner as shown in FIG. 14D.

In addition, when the edge direction of the block to be processed is the edge type 1, the edge direction of a block adjacent to the block to be processed in the upper direction is the edge type 4, and the edge direction of a block adjacent to the block to be processed in the upper-left direction is the edge type 3, 8 filtered pixels are determined in accordance with the manner as shown in FIG. 14E.

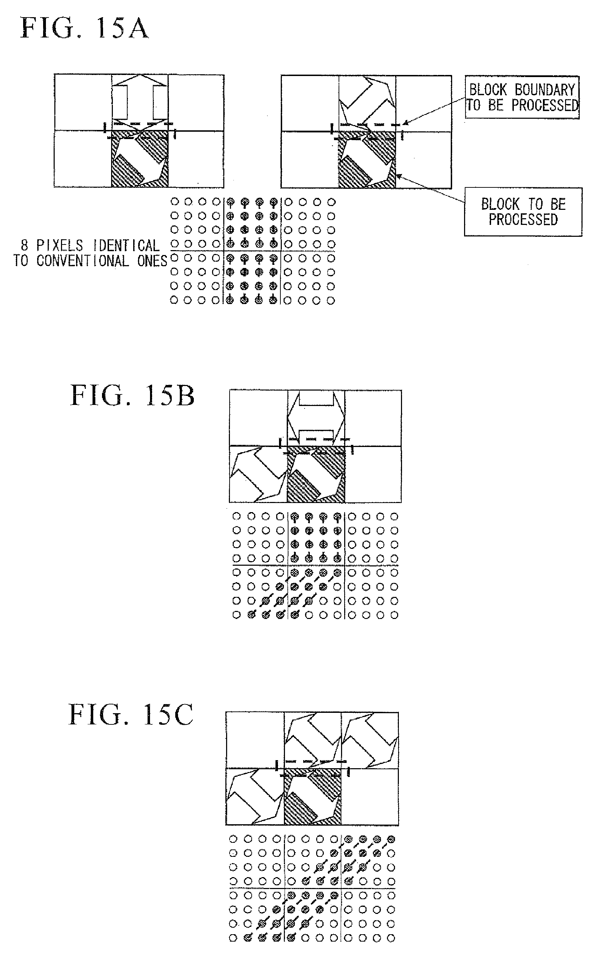

The specific examples shown in FIGS. 15A to 15G describe how 8 filtered pixels are determined in accordance with the edge direction of a block located around the block to be processed, when the edge direction of a block to be processed is the edge type 2.

FIG. 15A shows a specific example in which the edge direction of the block to be processed is the edge type 2 and the edge direction of a block adjacent to the block to be processed in the upper direction is the edge type 3 or the edge type 4. As shown in FIG. 15A, in these cases, 8 filtered pixels are determined in the same manner as in the conventional technique.

Furthermore, FIG. 15B shows a specific example in which the edge direction of the block to be processed is the edge type 2, the edge direction of a block adjacent to the block to be processed in the upper direction is the edge type 1, and the edge direction of a block adjacent to the block to be processed in the left direction is the edge type 2.

Also, FIG. 15C shows a specific example in which the edge direction of the block to be processed is the edge type 2, the edge direction of a block adjacent to the block to be processed in the upper direction is the edge type 2, the edge direction of a block adjacent to the block to be processed in the upper-right direction is the edge type 2, and the edge direction of a block adjacent to the block to be processed in the left direction is the edge type 2.

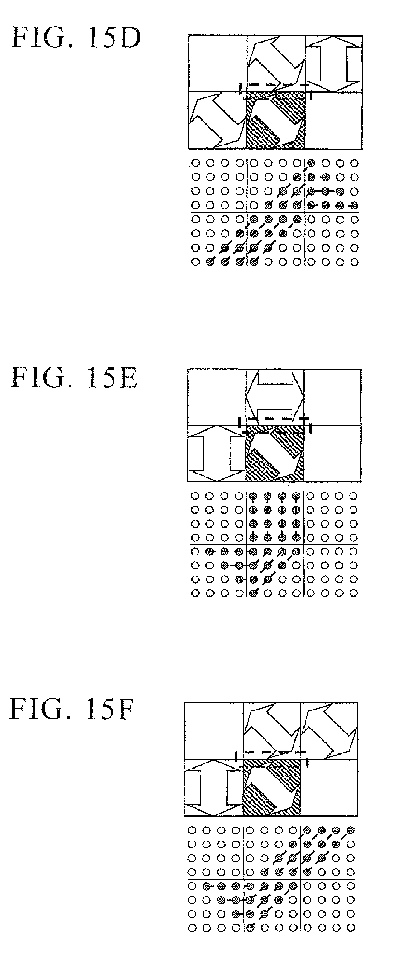

In addition, FIG. 15D shows a specific example in which the edge direction of the block to be processed is the edge type 2, the edge direction of a block adjacent to the block to be processed in the upper direction is the edge type 2, the edge direction of a block adjacent to the block to be processed in the upper-right direction is the edge type 3, and the edge direction of a block adjacent to the block to be processed in the left direction is the edge type 2.

Also, FIG. 15E shows a specific example in which the edge direction of the block to be processed is the edge type 2, the edge direction of a block adjacent to the block to be processed in the upper direction is the edge type 1, and the edge direction of a block adjacent to the block to be processed in the left direction is the edge type 3.

In addition, FIG. 15F shows a specific example in which the edge direction of the block to be processed is the edge type 2, the edge direction of a block adjacent to the block to be processed in the upper direction is the edge type 2, the edge direction of a block adjacent to the block to be processed in the upper-right direction is the edge type 2, and the edge direction of a block adjacent to the block to be processed in the left direction is the edge type 3.

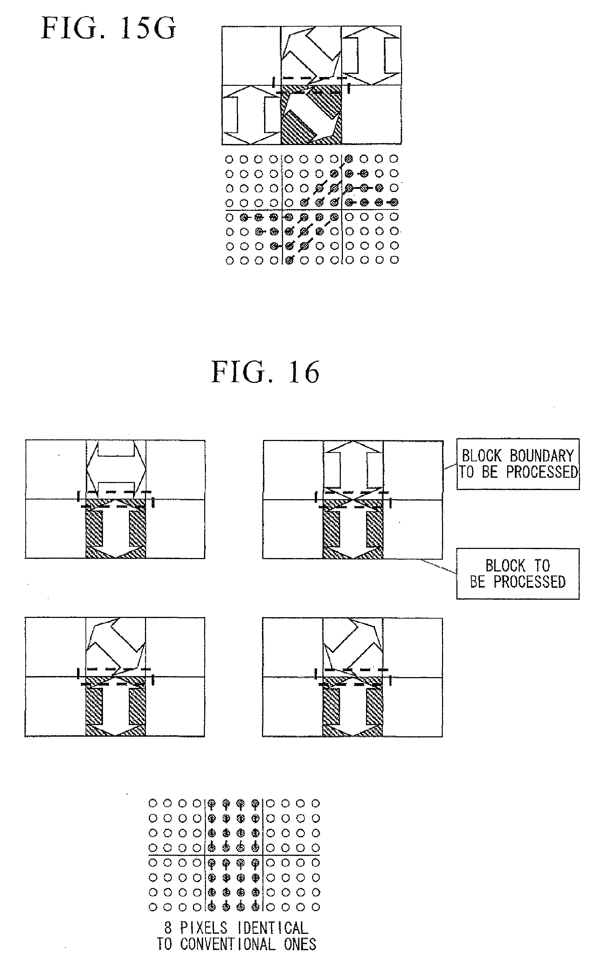

FIG. 15G shows a specific example in which the edge direction of the block to be processed is the edge type 2, the edge direction of a block adjacent to the block to be processed in the upper direction is the edge type 2, the edge direction of a block adjacent to the block to be processed in the upper-right direction is the edge type 3, and the edge direction of a block adjacent to the block to be processed in the left direction is the edge type 3.

The specific examples shown in FIG. 16 describe how 8 filtered pixels are determined in accordance with the edge direction of a block located around the block to be processed when the edge direction of a block to be processed is the edge type 3.

As shown in this figure, when the edge direction of the block to be processed is the edge type 3, 8 filtered pixels are determined in the same manner as in the conventional technique regardless of whether the edge direction of a block adjacent to the block to be processed in the upper direction is the edge type 1, the edge type 2, the edge type 3, or the edge type 4.

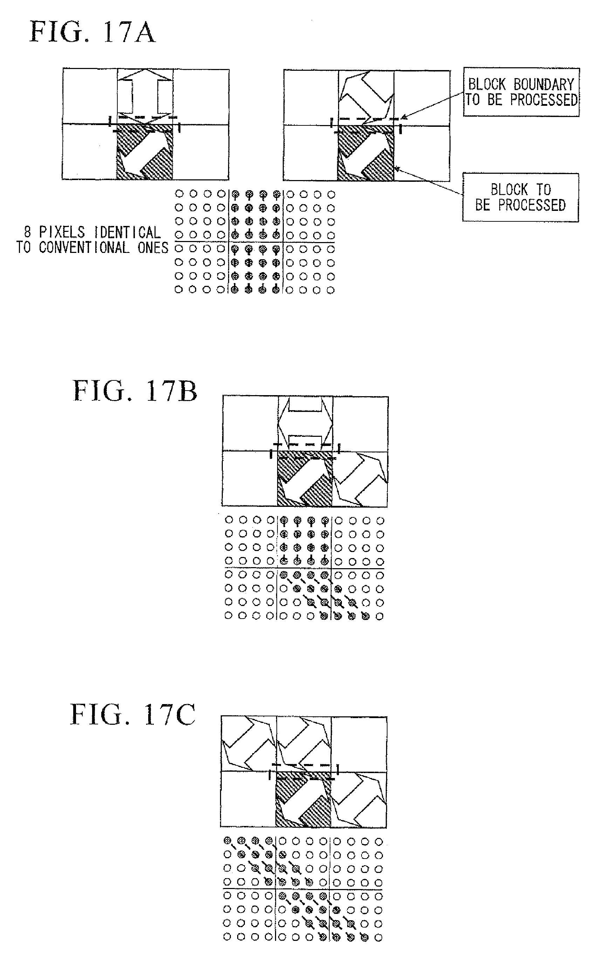

The specific examples shown in FIGS. 17A to 17G describe how 8 filtered pixels are determined in accordance with the edge direction of a block located adjacent to the block to be processed when the edge direction of a block to be processed is the edge type 4.

FIG. 17A shows a specific example in which the edge direction of the block to be processed is the edge type 4, and the edge direction of a block adjacent to the block to be processed in the upper direction is the edge type 3 or the edge type 2. As shown in FIG. 17A, in these cases, 8 filtered pixels are determined in the same manner as in the conventional technique.

Also, FIG. 17B shows a specific example in which the edge direction of the block to be processed is the edge type 4, the edge direction of a block adjacent to the block to be processed in the upper direction is the edge type 1, and the edge direction of a block adjacent to the block to be processed in the right direction is the edge type 4.

In addition, FIG. 17C shows a specific example in which the edge direction of the block to be processed is the edge type 4, the edge direction of a block adjacent to the block to be processed in the upper direction is the edge type 4, the edge direction of a block adjacent to the block to be processed in the upper-left direction is the edge type 4, and the edge direction of a block adjacent to the block to be processed in the right direction is the edge type 4.

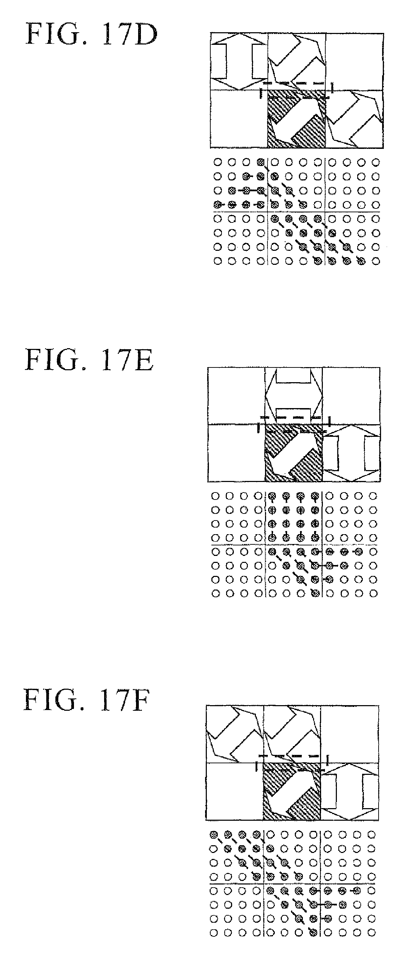

Also, FIG. 17D shows a specific example in which the edge direction of the block to be processed is the edge type 4, the edge direction of a block adjacent to the block to be processed in the upper direction is the edge type 4, the edge direction of a block adjacent to the block to be processed in the upper-left direction is the edge type 3, and the edge direction of a block adjacent to the block to be processed in the right direction is the edge type 4.

In addition, FIG. 17E shows a specific example in which the edge direction of the block to be processed is the edge type 4, the edge direction of a block adjacent to the block to be processed in the upper direction is the edge type 1, and the edge direction of a block adjacent to the block to be processed in the right direction is the edge type 3.

Also, FIG. 17F shows a specific example in which the edge direction of the block to be processed is the edge type 4, the edge direction of a block adjacent to the block to be processed in the upper direction is the edge type 4, the edge direction of a block adjacent to the block to be processed in the upper-left direction is the edge type 4, and the edge direction of a block adjacent to the block to be processed in the right direction is the edge type 3.

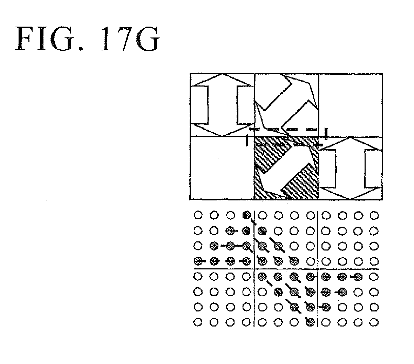

In addition, FIG. 17G shows a specific example in which the edge direction of the block to be processed is the edge type 4, the edge direction of a block adjacent to the block to be processed in the upper direction is the edge type 4, the edge direction of a block adjacent to the block to be processed in the upper-left direction is the edge type 3, and the edge direction of a block adjacent to the block to be processed in the right direction is the edge type 3.

In this way, in the step S 102 in the flowchart of FIG. 4, filtered pixels to be processed by the deblocking filter are determined in accordance with the manners as shown in FIGS. 14A to 17G based on the edge directions of blocks in the MB by executing the flowchart of FIG. 9.

It is to be noted that, in FIGS. 14A to 17G, the representative specific examples are shown in consideration of the state (frequency) of the generated texture; however, with respect to other specific examples, filtered pixels to be processed by the deblocking filter can also be determined like the specific examples shown in FIGS. 14A to 17G.

For example, when the edge direction of a block adjacent to the block to be processed in the upper-right direction shown in FIG. 14B is not the edge type 2 but the edge type 1, 8 filtered pixels are determined in the same manner as in the conventional technique. The reason is that, since the texture is interrupted at a boundary between the block adjacent to the block to be processed in the upper direction and the block adjacent to the block to be processed in the upper-right direction, it is determined that it is better not to apply the deblocking filter.

In contrast, for example, when the edge direction of a block adjacent to the block to be processed in the upper-right direction shown in FIG. 14B is not the edge type 2 but the edge type 4, the texture extends in the upper-right direction and then is forcibly oriented to the lower-left direction. In other words, the texture is bent like the shape "Λ". It is to be noted that, in this case, the edge direction of a block adjacent to the block to be processed in the right direction is also determined. It is expected that there will not be many states (frequency) in which the texture changes steeply, including the case that the texture is bent like the shape "<" or ">"; however, it is possible to apply the deblocking filter even in these cases.

In short, under an assumption that a texture (a line or the like) in a picture appears in a direction perpendicular to an edge, a situation in which a line segment of the texture is interrupted may cause deterioration in the efficiency, and thus such a situation is excluded from candidates to which the deblocking filter is to be applied.

Here, FIGS. 14A to 17G describe how 8 filtered pixels are determined in accordance with the edge direction of the block to be processed and the edge directions of blocks adjacent to the block to be processed when a block boundary in the horizontal direction is to be processed; however, even when a block boundary in the vertical direction is to be processed, 8 filtered pixels are determined in the same way. In other words, when a block boundary in the vertical direction is to be processed, it can be processed in the same way in the form that FIGS. 14A to 17G are rotated by 90°.

As described above, in the step S 102 in the flowchart of FIG. 4, 8 filtered pixels are determined in the manners as shown in FIGS. 14A to 17G based on the edge directions of a block to be processed and blocks located around the block to be processed (blocks contacting the block to be processed in the upper, lower, right, left, and/or aslant direction) by executing the flowchart of FIG. 9. For realizing this determining process, the filtered pixel determining information storage unit 30 shown in FIG. 3 is provided.

FIG. 18 illustrates an example of a data structure of the filtered pixel determining information storage unit 30 provided for determining filtered pixels.

As shown in this figure, when a block boundary to be processed is in the horizontal direction, the filtered pixel determining information storage unit 30 stores location information which describes a location of a pixel determined as a filtered pixel for each of combinations of a value of the edge type (the edge direction) of the block to be processed and values of the edge types of surrounding blocks. Also, when the block boundary to be processed is in the vertical direction, the filtered pixel determining information storage unit 30 stores location information which describes a location of a pixel determined as a filtered pixel for each of combinations of a value of the edge type of the block to be processed and values of the edge types of surrounding blocks.

The filtered pixel determining information storage unit 30 having the above data structure is provided, in the step S601, the information stored in the edge direction information storage unit 20 shown in FIG. 3 is referred to identify the edge type of the block to be processed and the edge types of the blocks located around the block to be processed, and, in the step S602, 8 filtered pixels are determined by referring to the information stored in the filtered pixel determining information storage unit 30 using information on the identified edge types and information on the direction of the block boundary to be processed as a key.

[1-4] Processes of the steps S103 and S104

In the step S103, it is determined whether or not the deblocking filter should be used. This determination uses the conventional determination conditions defined in H.264/AVC.

When it is determined in the step S103 that the deblocking filter should be used, in the subsequent step S104, the conventional deblocking filter as defined in the H.264/AVC is applied to the filtered pixels determined in the step S102.

While the conventional deblocking filter is able to change only four sets of 8 pixels in a direction perpendicular to the block boundary, the embodiment of the present invention as described above allows the deblocking filter to be applied in an aslant direction. As a result, the problems to be solved by the present invention can be dealt with, and it is expected to improve the subjective picture quality and the coding efficiency.

Although the above description relates to 4x4 blocks, the concept of the present invention can also be applied to sizes other than 4x4 block. Also, it can not only be applied to a luminance signal but also to a chrominance signal in the same way.

[2] Regarding experiment performed for verifying the effectiveness of the present embodiment

Next, results of the experiment performed for verifying the effectiveness of the present embodiment will be described.

In this experiment, the present embodiment was implemented for a standard picture Foreman used for standardization, and the picture quality was verified. Specific experiment conditions are as follows.

· Software used: KTA (Key Technical Area) ver. 1.8
· Picture type: Foreman
· Picture size: QCIF (176×144)
· GOP structure: III... (All intra coded)
· Quantization parameters: 37 (fixed)
· Edge directions: 4
· number of frames: 10
· Frame skip: 1

It is to be noted that the picture and the software are available from the following.

• http://media.xiph.org/video/derf/ (standard picture)
• http://iphome.hhi.de/suehring/tml/download/KTA/ (software)

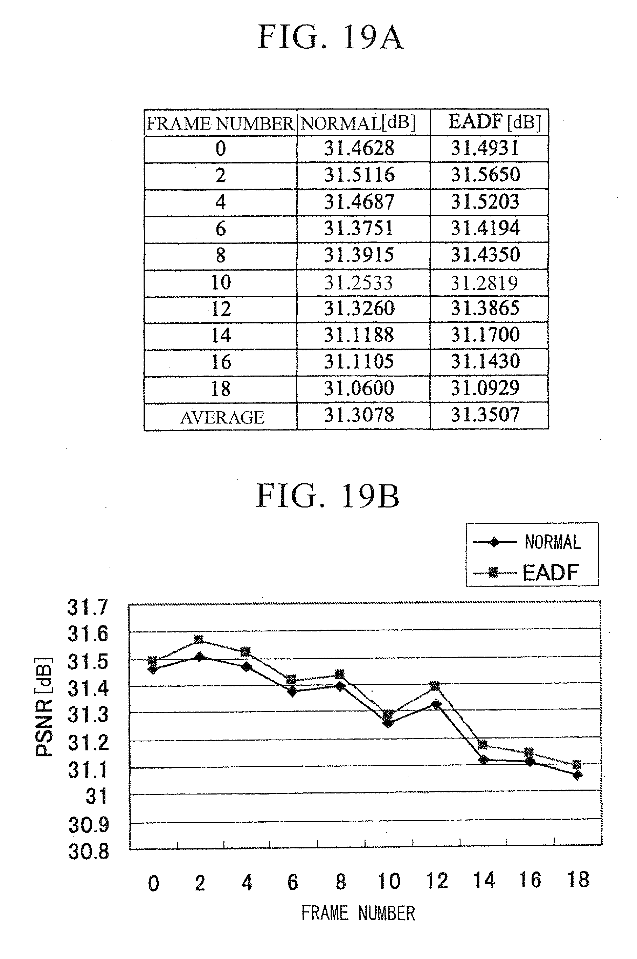

FIG. 19A illustrates values of objective picture quality PSNR (Peak Signal-to-Noise Ratio) for the respective frames which were obtained by the experiment with respect to the standard picture Foreman, and FIG. 19B illustrates its graphical data. Here, in FIG. 19B, a horizontal axis represents the number of a processed frame, and a vertical axis represents an objective quality (PSNR) of the corresponding frame. Also, a legend Normal means a conventional deblocking filter, and EADF (Edge Adaptive Deblocking Filter) means a filter of the present embodiment.

According to the above experimental results, it was possible to confirm that the picture quality was improved by using the present embodiment and the effectiveness of the present embodiment was verified.

[Second Embodiment]

Next, a deblocking apparatus 1 in accordance with a second embodiment of the present invention will be described.

The first embodiment of the present invention employs a structure in which the deblocking filter is executed using pixels arranged in a straight line orthogonal to the direction of an edge, and thus the quality of a picture including aslant edges can be improved ; however, the picture quality of a picture including a complex texture might be deteriorated in a certain frame.

Thus, in consideration of this point, the second embodiment employs a structure in which the strength of an edge of each block is obtained, and if a block to be processed of which the obtained edge strength is high, in other words, a picture having a strong (sharp) aslant edge, the deblocking filter the same as that in the first embodiment is used to execute a deblocking process; in contrast, if a block to be processed of which the obtained edge strength is low, in other words, a picture including a complex texture or a picture having a weak (unnoticed) edge, a deblocking process is executed using a deblocking filter in accordance with a conventional technique.

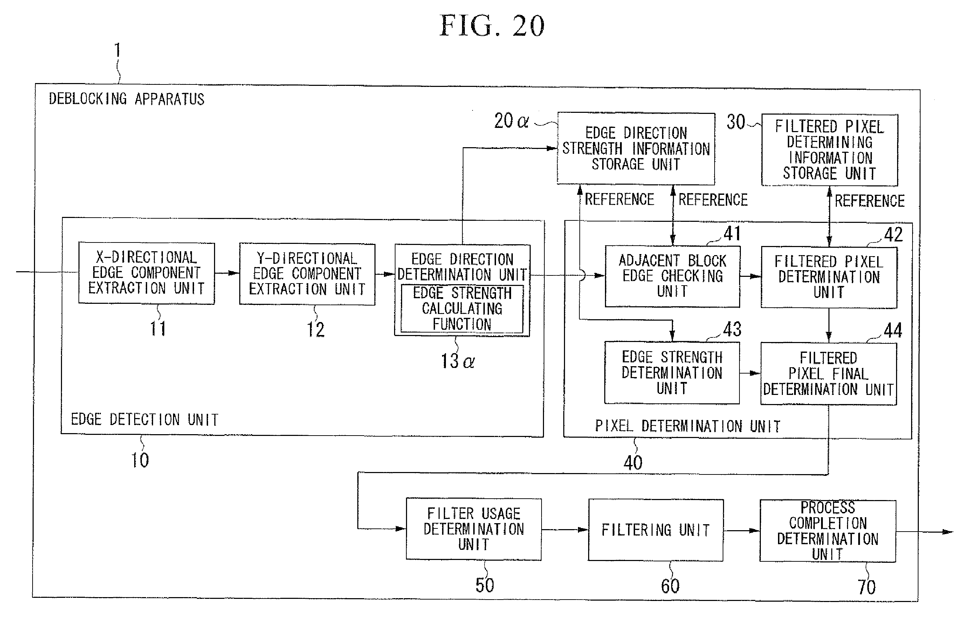

FIG. 20 illustrates a configuration of the deblocking apparatus 1 in accordance with the second embodiment of the present invention.

The deblocking apparatus 1 of the present embodiment employs a structure in which there are provided with an edge direction determination unit $13\alpha$ instead of the edge direction determination unit 13 provided in the first embodiment; and an edge direction strength information storage unit $20\alpha$ instead of the edge direction information storage unit 20 provided in the first embodiment, and the pixel determination unit 40, which is provided in the first embodiment, is further provided with an edge strength determination unit 43 and a filtered pixel final determination unit 44.

The edge direction determination unit $13\alpha$ determines the direction of an edge of each block by using edge components extracted by the x-directional edge component extraction unit 11 and the y-directional edge component extraction unit 12, calculates the strength of the edge, and stores information thereon in the edge direction strength information storage unit $20\alpha$.

Also, the edge strength determination unit 43 obtains the edge strength of each block in the MB by referring to the information stored in the edge direction strength information storage unit $20\alpha$ and compares it with a predetermined threshold value to determine whether or not the edge strength of each block in the MB is high.

In addition, with respect to a block of which the edge strength is determined to be low by the edge strength determination unit 43, the filtered pixel final determination unit 44 replaces filtered pixels determined by the filtered pixel determination unit 42 with filtered pixels used in the conventional technique (filtered pixels formed by pixels arranged in a straight line orthogonal to a direction of a block boundary).

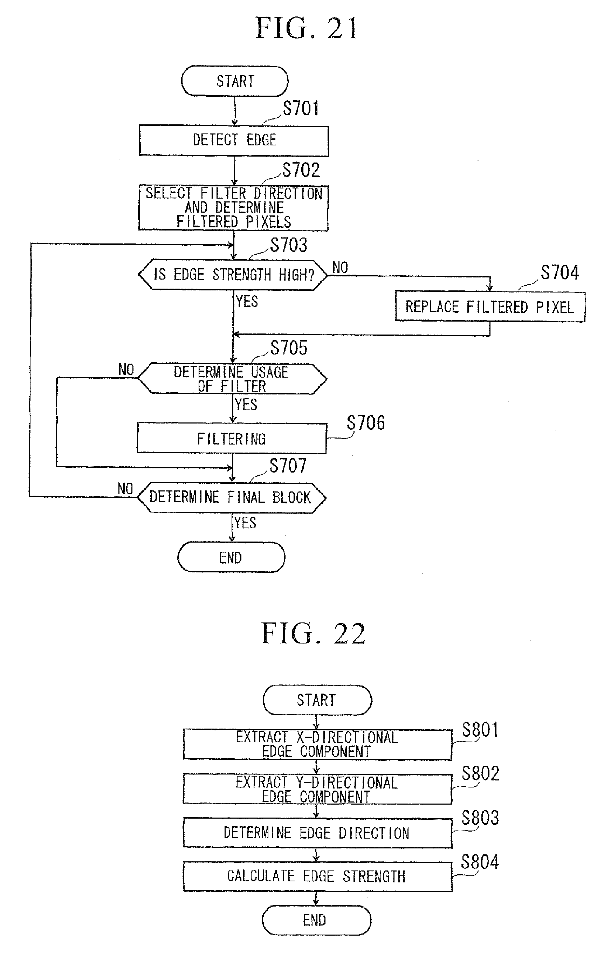

FIGS. 21 and 22 illustrate an example of flowcharts that are executed by the deblocking apparatus 1 of the present embodiment for filtering $4\times4$ block boundaries in one MB.

Next, the process executed by the deblocking apparatus 1 of the present embodiment will be described in detail in accordance with to these flowcharts.

It is to be noted that, hereinafter, the block size is 4x4, and a processing target is a luminance signal, unless otherwise stated. Also, the edge directions are assumed to be four directions (horizontal (0°), vertical (90°), and aslant (45° and 135°)).

As shown in the flowchart of FIG. 21, in the step S701, the deblocking apparatus 1 of the present embodiment first detects the direction and strength of all edges in sixteen 4x4 blocks in the MB, and stores information thereon in the edge direction strength information storage unit $20\alpha$. The present embodiment is different from the first embodiment in that the process of extracting the edge strength is further provided. The method for detecting the edge direction and the edge strength will be described later in relation to the steps S801 to S804 (the flowchart of FIG. 22).

Subsequently, in the step S702, a filtering direction is selected based on the edge direction obtained in the step S701. After the filtering direction is selected, 8 pixels required for operating the deblocking filter are designated. The details of the method for selecting the filtering direction and designating the pixels are already described in the steps S601 to S602 (the flowchart of FIG. 9).

Subsequently, in the step S703, one block to be processed is selected (the order of locations in the MB to which the filter is applied is based on H.264/AVC), and the edge strength of the selected block extracted in the step S701 is compared with a predetermined threshold value. If the edge strength is higher than the threshold value, it is determined that the edge is strong and the texture appears in an aslant direction; therefore, the filtered pixels determined in the step S702 are determined as final filtered pixels, and the processing proceeds to the step S705 without executing the process of the step S704.

In contrast, if the edge strength is lower than or equal to the threshold value, it is determined that the edge is weak and the texture does not appear in an aslant direction, and thus the processing proceeds to the step S704 in order to replace the filtered pixels determined in the step S702. In the step S704, in the same manner as in the conventional technique, pixels arranged in a straight line orthogonal to the direction of the block boundary are determined as final filtered pixels, so that 8 pixels required for the process of the deblocking filter are designated. In other words, the filtering direction selected in the step S702 is changed to a direction orthogonal to the block boundary.

Upon completion of the processes of the steps S703 and S704, it is then determined in the step S705 whether or not the deblocking filter should be used. This determination uses conventional determination conditions defined in the H.264/AVC. If the filter should be used, the processing proceeds to the step S706. If the filter should not be used, in order to process the next block, the processing proceeds to the step S707 to determine whether or not the location to be processed has reached a final block.

Subsequently, with respect to a block that is not processed in the step S704, an actual filtering is performed in the step S706 by using 8 pixels determined in the step S702 (i.e., filtering in an aslant direction as in the first embodiment). In contrast, with respect to a block that is processed in the step S704, an actual filtering is executed in the step S706 by using 8 pixels determined in the step S704 (i.e., filtering only in a direction perpendicular to the block boundary as in the conventional technique).

Subsequently, it is determined in the step S707 whether or not the next block should be filtered. If the processed block is not a final block, in order to process the next block, the processing returns to the process of the step S703. If the final block is already processed, the processing ends.

Next, the details of the process executed in the step S701 will be described in accordance with the flowchart of FIG. 22.

Upon entry into the process of the step S701 in the flowchart of FIG. 21, in the step S801, the deblocking apparatus 1 of the present embodiment first extracts an edge component in an x-direction (the horizontal direction) as shown in the flowchart of FIG. 22. The details of this process are already described in detail in relation to the steps S301 to S302 of the first embodiment.

Subsequently, an edge component in a y-direction (the vertical direction) is extracted in the step S802. The details of this process are already described in detail in relation to the steps S401 to S402 of the first embodiment.

Subsequently, in the step S803, an angle D of an edge included in a block is obtained from the sum Sx of horizontal components of the edge obtained in the step S801 and the sum Sy of vertical components of the edge obtained in the step S802, and the direction of the edge is determined based thereon. The details of this process are already described in the steps S501 to S502 of the first embodiment.

Subsequently, in the step S804, the sum Sx of the horizontal components of the edge obtained in the step S801 and the sum Sy of the vertical components of the edge obtained in the step S802 are applied to the following equation to calculate the strength M of the edge included in the block.

$$M = (Sx^2 + Sy^2)^{1/2}$$

It is to be noted that the threshold value to be compared with the edge strength, which is used in the step S703 in the flowchart of FIG. 21, can be determined by, for example, obtaining frames from a plurality of videos to be coded and calculating the average of the strengths of edges included in the frames.

In accordance with the present embodiment as described above, it is possible to realize the deblocking filter corresponding to the edge direction in consideration of the edge strength. As a result, it is an effective method particularly when there is a strong texture in an aslant direction and it is intended to change the direction of the filtered pixels only in that portion, in comparison to the first embodiment, which employs a structure in which a filtering direction is determined from the edge direction without consideration of the edge strength even though the strength of the edge is weak.

[Third Embodiment]

Next, a deblocking apparatus 1 in accordance with a third embodiment of the present invention will be described.

The differences between the present embodiment and the second embodiment are the method for detecting an edge direction corresponding to the step S701 and the determining method using the edge strength corresponding to the step S703. It is to be noted that the configuration of the deblocking apparatus in accordance with the present embodiment is identical to that of the deblocking apparatus in accordance with the second embodiment (see FIG. 20).

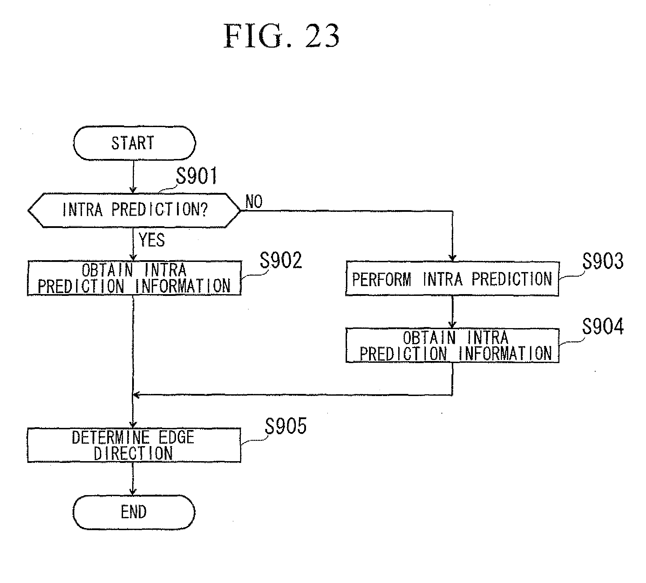

First, the change in the step S701 is described in detail in accordance with the flowchart of FIG. 23. In the present embodiment, an edge direction is detected by using intra prediction information.

It is to be noted that, hereinafter, the block size is 4x4, and a processing target is a luminance signal, unless otherwise stated. Also, the edge directions are assumed to have four directions (horizontal (0°), vertical (90°), and aslant (45° and 135°)).

When detecting an edge direction, as shown in the flowchart of FIG. 23, the deblocking apparatus 1 of the present embodiment, in the step S901, first determines whether or not an MB to be processed is coded by means of intra prediction. If intra prediction coding is performed, the processing proceeds to the step S902 to obtain prediction mode information of the intra prediction in the MB.

In contrast, if the MB to be processed is not coded by intra prediction but coded by inter prediction, the processing proceeds to the step S903 to perform intra prediction of the MB to be processed. Upon completion of the step S903, the processing then proceeds to the step S904 to obtain prediction mode information obtained by the intra prediction.

Subsequently, in the step S905, an edge direction is determined in accordance with the prediction mode information obtained in the step S902 or S904. The determination of the edge direction uses the following table 3, which is a correspondence table between the prediction mode and the edge direction.

[Table 3]

| Prediction Mode | Edge Direction |
|:---:|:---:|
| 0 | 1 |
| 1 | 3 |
| 2 | Non |
| 3 | 2 |
| 4 | 4 |
| 5 | 4 |
| 6 | 4 |
| 7 | 2 |
| 8 | 2 |

For example, since vertical prediction is selected in H.264/AVC when the prediction mode is 0, it is expected that pixels having the same pixel value extend in a line in the vertical direction. Thus, since the texture of a picture is in the vertical direction, the edge is expected to correspond to the horizontal direction, in other words, the edge type 1 of FIG. 12 in the first embodiment. Also, since the MB is predicted with an average value when the prediction mode is 2, it is presumed that the edge is absent or very weak, and thus the edge direction is determined as Non.

In this way, the edge direction is estimated in the present embodiment from the prediction mode when the MB to be processed is intra-predicted.

Next, the change in the step S703 will be described in detail.

When the edge direction is determined as Non in the step S905, the deblocking apparatus 1 of the present embodiment determines that the edge strength is lower than or equal to a threshold value, and the processing proceeds to the step S704 to perform a process in the same direction as a conventional deblocking filter. In other cases, the process of the step S704 is not executed, so that the deblocking filter is applied in accordance with the edge direction.

In accordance with the present embodiment as described above, it is possible to apply the deblocking filter corresponding to the edge direction while taking the edge strength into consideration, similarly to the second embodiment. As a result, it is an effective method particularly when a strong texture exists in an aslant direction and the direction of the filtered pixels should be changed only in that portion, in comparison to the first embodiment, which employs a structure in which a filtering direction is determined from the edge direction without consideration of the edge strength even though the strength of the edge is weak.

It is to be noted that a program for realizing each processing step described above may be recorded in a computer-readable recording medium, and the program recorded in the recording medium may be read and executed by a computer system so that the various processes described above in relation to a video coding apparatus may be performed.

The term "computer system" used herein may include an OS (Operating System) and hardware such as peripheral devices. Also, when the computer system uses a WWW (World Wide Web) system, the computer system may include a homepage providing environment (or, a displaying environment).

The computer-readable recording medium may be a flexible disk, a magnetooptical disk, ROM (Read Only Memory), a writable nonvolatile memory such as a flash memory, a portable medium such as a CD (compact disc)-ROM, and a hard disk built in the computer system. Also, the computer-readable recording medium may include a device that keeps a program for a certain time, like a volatile memory (e.g., DRAM (Dynamic Random Access Memory) in a computer system which becomes a server or a client when the program is transmitted via a network such as the Internet or a communication circuit such as a telephone circuit.

The program may also be transmitted from a computer system having a storage apparatus or the like in which the program is stored to another computer system via a transmission medium or by means of transmission waves in a transmission medium. Here, the transmission medium used for transmitting the program is a medium having an information transmission function such as a network (a communication network) like the Internet and a communication circuit (a communication line) like a telephone circuit. In addition, the program may be configured to realize part of the above functions. Furthermore, the program may be a program that realizes the above functions by combining it with a program already recorded in the computer system, a so-called differential file (a differential program).

Although embodiments of the present invention are described above, the present invention is not limited to the foregoing embodiments, and additions, omissions, substitutions, or other changes can be made without departing from the gist of the present invention. The present invention is not limited to the above description but defined only by the appended claims.

Industrial Applicability

The present invention can be applied to deblocking that is used in video coding apparatuses and video decoding apparatuses in which predictive coding on a block basis is implemented. By applying the present invention, it is possible to reduce block noise while preserving a texture inherent in a picture, thereby realizing deblocking that improves the subjective picture quality.

Description of Reference Symbols

| | |
|---|---|
| 1: | deblocking apparatus |
| 10: | edge detection unit |
| 11: | x-directional edge component extraction unit |
| 12: | y-directional edge component extraction unit |
| 13, 13$\alpha$: | edge direction determination unit |
| 20, 20$\alpha$: | edge direction information storage unit |
| 30: | filtered pixel determining information storage unit |
| 40: | pixel determination unit |
| 41: | adjacent block edge checking unit |
| 42: | filtered pixel determination unit |
| 43: | edge strength determination unit |
| 44: | filtered pixel final determination unit |
| 50: | filter usage determination unit |
| 60: | filtering unit |
| 70: | process completion determination unit |

**Claims**

1.  A deblocking method for reducing block distortion occurring in a video coding scheme for performing predictive coding on a block basis and in a video decoding scheme for decoding video coded by the video coding scheme, the method comprising:

    a detection step of detecting, for each block, a direction in which a pixel value is changed which is represented by an edge that indicates a direction of change in pixel value in each block;
    a determination step of determining a direction in which a deblocking filter is to be applied to a block boundary, based on a direction of an edge detected for a block to be processed which includes the block boundary subject to deblocking and on a direction of an edge detected for a block contacting the block to be processed; and
    a filtering step of applying the deblocking filter to the block boundary in accordance with the determined direction.

2.  The deblocking method according to claim 1, wherein, for each block, the detection step detects a component in the horizontal direction of a change in pixel value in each block, detects a component in the vertical direction of a change in pixel value in each block, and detects the direction of the edge based on the detected component in the horizontal direction and the detected component in the vertical direction.

3.  The deblocking method according to claim 1, wherein, for each block, the detection step obtains information on a prediction mode which is used when intra coding of each block is performed, and detects the direction of the edge based on the obtained information on the prediction mode.

4.  The deblocking method according to claim 2, further comprising a calculation step of calculating, for each block, the strength of the edge based on the detected component in the horizontal direction and the detected component in the vertical direction,
    wherein the determination step compares the strength of the edge calculated for the block to be processed with a predetermined threshold value, and, when the strength of the edge is lower than or equal to the predetermined threshold value, changes the direction in which the deblocking filter is to be applied, which is determined based on the direction of the edge, to a direction orthogonal to the block boundary.

5. The deblocking method according to claim 3, wherein when the information on the prediction mode for the block to be processed represents a prediction mode using a pixel average value as a predictive signal, the determination step changes the direction in which the deblocking filter is to be applied, which is determined based on the direction of the edge, to a direction orthogonal to the block boundary.

6. The deblocking method according to any one of claims 1 to 5, wherein the determination step determines the direction in which the deblocking filter is to be applied by referring to data stored in a storage means that stores information which describes a correlation among the direction of the edge of the block to be processed, the direction of the edge of the block contacting the block to be processed, and the direction in which the deblocking filter is to be applied, using the direction of the edge detected for the block to be processed and the direction of the edge detected for the block contacting the block to be processed as a key.

7. A deblocking apparatus for reducing block distortion occurring in a video coding scheme for performing predictive coding on a block basis and in a video decoding scheme for decoding video coded by the video coding scheme, the apparatus comprising:

a detection means for detecting, for each block, a direction in which a pixel value is changed which is represented by an edge that indicates a direction of change in pixel value in each block;
a determination means for determining a direction in which a deblocking filter is to be applied to a block boundary, based on a direction of an edge detected for a block to be processed which includes the block boundary subject to deblocking and on a direction of an edge detected for a block contacting the block to be processed; and
a filtering means for applying the deblocking filter to the block boundary in accordance with the determined direction.

8. The deblocking apparatus according to claim 7, further comprising a storage means for storing information which describes a correlation among the direction of the edge of the block to be processed, the direction of the edge of the block contacting the block to be processed, and the direction in which the deblocking filter is to be applied, wherein the determination means determines the direction in which the deblocking filter is to be applied, by referring data stored in the storage means using the direction of the edge detected for the block to be processed and the direction of the edge detected for the block contacting the block to be processed as a key.

9. A deblocking program for executing the deblocking method according to any one of claims 1 to 6 in a computer.

10. A computer-readable recording medium in which a deblocking program for executing the deblocking method according to any one of claims 1 to 6 in a computer is recorded.

# FIG. 1

TEXTURE INCLUDED IN PICTURE

DEBLOCKING FILTERING RANGE

(a)

SMOOTHED BY INFLUENCE OF FILTER

REDUCE BLOCK NOISE

(b)

PRESERVE TEXTURE

REDUCE BLOCK NOISE

(c)

# FIG. 2

EDGE DIRECTION
(DIRECTION OF CHANGE OF
LUMINANCE SIGNAL)

TEXTURE

DIRECTION OF TEXTURE
(LUMINANCE IN THIS DIRECTION IS CONSTANT)

# FIG. 3

EP 2 339 852 A1

DEBLOCKING APPARATUS 1

EDGE DIRECTION INFORMATION STORAGE UNIT 20

FILTERED PIXEL DETERMINING INFORMATION STORAGE UNIT 30

REFERENCE

REFERENCE

EDGE DETECTION UNIT 10

X-DIRECTIONAL EDGE COMPONENT EXTRACTION UNIT 11

Y-DIRECTIONAL EDGE COMPONENT EXTRACTION UNIT 12

EDGE DIRECTION DETERMINATION UNIT 13

PIXEL DETERMINATION UNIT 40

ADJACENT BLOCK EDGE CHECKING UNIT 41

FILTERED PIXEL DETERMINATION UNIT 42

FILTER USAGE DETERMINATION UNIT 50

FILTERING UNIT 60

PROCESS COMPLETION DETERMINATION UNIT 70

# FIG. 4

```
            START

            │
    ┌───────▼────────┐
    │  DETECT EDGE   │  S101
    └───────┬────────┘
            │
 ┌──────────▼──────────────┐
 │ SELECT FILTER DIRECTION AND │  S102
 │ DETERMINE FILTERED PIXELS   │
 └──────────┬──────────────┘
            │
     ┌──────▼──────────────────┐
 NO  │ DETERMINE USAGE OF FILTER │  S103
 ◄───┤                          │
     └──────┬──────────────────┘
            │ YES
    ┌───────▼────────┐
    │   FILTERING    │  S104
    └───────┬────────┘
            │
     ┌──────▼──────────────┐
 NO  │ DETERMINE FINAL BLOCK │  S105
 ◄───┤                      │
     └──────┬──────────────┘
            │ YES
            ▼
           END
```

# FIG. 5

```
            START

            │
 ┌──────────▼──────────────────────┐
 │ EXTRACT X-DIRECTIONAL EDGE COMPONENT │  S201
 └──────────┬──────────────────────┘
            │
 ┌──────────▼──────────────────────┐
 │ EXTRACT Y-DIRECTIONAL EDGE COMPONENT │  S202
 └──────────┬──────────────────────┘
            │
 ┌──────────▼──────────────────────┐
 │   DETERMINE EDGE DIRECTION       │  S203
 └──────────┬──────────────────────┘
            │
            ▼
           END
```

22

# FIG. 6

```
        START

APPLY FILTER fx TO
ENTIRE TARGET BLOCK,        S301
AND OBTAIN MATRIX EMx

OBTAIN SUM Sx OF RESPECTIVE   S302
COMPONENTS OF EMx

         END
```

# FIG. 7

```
        START

APPLY FILTER fy TO
ENTIRE TARGET BLOCK,        S401
AND OBTAIN MATRIX EMy

OBTAIN SUM Sy OF RESPECTIVE   S402
COMPONENTS OF EMy

         END
```

# FIG. 8

```
        START

EXTRACT EDGE ANGLE D        S501

DETERMINE EDGE DIRECTION     S502
FROM EDGE ANGLE D

         END
```

# FIG. 9

```
        ( START )
           │
           ▼
┌─────────────────────────────┐        S601
│ CHECK EDGE OF ADJACENT BLOCK │
└─────────────────────────────┘
           │
           ▼
┌─────────────────────────────┐        S602
│   DETERMINE FILTERED PIXEL   │
└─────────────────────────────┘
           │
           ▼
         ( END )
```

# FIG. 10

PIXEL VALUE →

| 23 | 25 | 28 | 30 |
|----|----|----|----|
| 24 | 23 | 29 | 33 |
| 26 | 28 | 30 | 34 |
| 30 | 32 | 35 | 37 |

FILTER fx

| −1 | +1 |
|----|----|

$30 - 28 = 2$

EMx

| 2  | 3 | 2 |
|----|---|---|
| −1 | 6 | 4 |
| 2  | 2 | 4 |
| 2  | 3 | 2 |

$$Sx = \sum_{j=1}^{4} \sum_{i=1}^{3} EMx(i, j) \qquad \therefore Sx = 31$$

# FIG. 11

PIXEL VALUE →

| 23 | 25 | 28 | 30 |
|----|----|----|----|
| 24 | 23 | 29 | 33 |
| 26 | 28 | 30 | 34 |
| 30 | 32 | 35 | 37 |

FILTER fx

| $-1$ |
|------|
| $+1$ |

$$33-30=3$$

EMy

| 1 | $-2$ | 1 | 3 |
|---|------|---|---|
| 2 | 5 | 1 | 1 |
| 4 | 4 | 5 | 3 |

$$Sy = \sum_{j=1}^{3} \sum_{i=1}^{4} EMy(i, j) \qquad \therefore Sy = 28$$

# FIG. 12

# FIG. 13

FIG. 14A

BLOCK BOUNDARY
TO BE PROCESSED

BLOCK TO BE
PROCESSED

8 PIXELS IDENTICAL
TO CONVENTIONAL ONES

FIG. 14B

FIG. 14C

FIG. 14D

FIG. 14E

FIG. 15A

BLOCK BOUNDARY TO BE PROCESSED

BLOCK TO BE PROCESSED

8 PIXELS IDENTICAL TO CONVENTIONAL ONES

FIG. 15B

FIG. 15C

FIG. 15D

FIG. 15E

FIG. 15F

# FIG. 15G

# FIG. 16

BLOCK BOUNDARY TO BE PROCESSED

BLOCK TO BE PROCESSED

8 PIXELS IDENTICAL TO CONVENTIONAL ONES

## FIG. 17A

BLOCK BOUNDARY
TO BE PROCESSED

BLOCK TO
BE PROCESSED

8 PIXELS IDENTICAL
TO CONVENTIONAL ONES

## FIG. 17B

## FIG. 17C

FIG. 17D

FIG. 17E

FIG. 17F

FIG. 17G

# FIG. 18

| DIRECTION OF BLOCK BOUNDARY TO BE PROCESSED | EDGE TYPE OF BLOCK TO BE PROCESSED | EDGE TYPE INFORMATION OF ADJACENT BLOCK | LOCATION INFORMATION OF FILTERED PIXEL |
|---|---|---|---|
| HORIZONTAL DIRECTION | EDGE TYPE 1 | ××××, ××××, ××××, ×××× | (××, ××) ····· (××, ××) |
| | | ××××, ××××, ×××× | (××, ××) ··· (××, ××) |
| | | ⋮ | ⋮ |
| | EDGE TYPE 2 | ××××, ××××, ××××, ×××× | (××, ××) ····· (××, ××) |
| | | ××××, ××××, ×××× | (××, ××) ··· (××, ××) |
| | | ⋮ | ⋮ |
| | EDGE TYPE 3 | ××××, ××××, ××××, ×××× | (××, ××) ····· (××, ××) |
| | | ××××, ××××, ×××× | (××, ××) ··· (××, ××) |
| | | ⋮ | ⋮ |
| | EDGE TYPE 4 | ××××, ××××, ××××, ×××× | (××, ××) ····· (××, ××) |
| | | ××××, ××××, ×××× | (××, ××) ··· (××, ××) |
| | | ⋮ | ⋮ |
| VERTICAL DIRECTION | ⋮ | ⋮ | ⋮ |

EP 2 339 852 A1

# FIG. 19A

| FRAME NUMBER | NORMAL[dB] | EADF[dB] |
|:---:|:---:|:---:|
| 0 | 31.4628 | 31.4931 |
| 2 | 31.5116 | 31.5650 |
| 4 | 31.4687 | 31.5203 |
| 6 | 31.3751 | 31.4194 |
| 8 | 31.3915 | 31.4350 |
| 10 | 31.2533 | 31.2819 |
| 12 | 31.3260 | 31.3865 |
| 14 | 31.1188 | 31.1700 |
| 16 | 31.1105 | 31.1430 |
| 18 | 31.0600 | 31.0929 |
| AVERAGE | 31.3078 | 31.3507 |

# FIG. 19B

FIG. 20

EP 2 339 852 A1

# FIG. 21

START
↓ S701
DETECT EDGE
↓ S702
SELECT FILTER DIRECTION AND DETERMINE FILTERED PIXELS
↓ S703
IS EDGE STRENGTH HIGH? —NO→ S704 REPLACE FILTERED PIXEL
↓ YES
S705 DETERMINE USAGE OF FILTER —NO→
↓ YES
FILTERING — S706
↓ S707
DETERMINE FINAL BLOCK —NO→
↓ YES
END

# FIG. 22

START
↓
EXTRACT X-DIRECTIONAL EDGE COMPONENT — S801
↓
EXTRACT Y-DIRECTIONAL EDGE COMPONENT — S802
↓
DETERMINE EDGE DIRECTION — S803
↓
CALCULATE EDGE STRENGTH — S804
↓
END

# FIG. 23

```
        ┌──────────┐
        │   START   │
        └──────────┘
              │
              ▼           S901
      ╱─────────────────╲      NO
     ╱ INTRA PREDICTION?  ╲──────────────────┐
      ╲─────────────────╱                     │
              │ YES                           │
              ▼                               ▼
  ┌─────────────────────┐  S902    ┌───────────────────────┐  S903
  │    OBTAIN INTRA      │          │ PERFORM INTRA PREDICTION │
  │ PREDICTION INFORMATION│          └───────────────────────┘
  └─────────────────────┘                    │
              │                               ▼
              │                    ┌───────────────────────┐  S904
              │                    │     OBTAIN INTRA       │
              │                    │ PREDICTION INFORMATION  │
              │                    └───────────────────────┘
              │                               │
              │◄──────────────────────────────┘
              ▼
  ┌─────────────────────┐  S905
  │  DETERMINE EDGE      │
  │    DIRECTION         │
  └─────────────────────┘
              │
              ▼
        ┌──────────┐
        │    END    │
        └──────────┘
```

39

# FIG. 24A

INPUT PICTURE → (−) → DCT → QUANTIZATION → ENTROPY CODING → BIT STREAM OUTPUT

QUANTIZATION → DEQUANTIZATION → INVERSE DCT → (+)

(+) → DEBLOCKING FILTER → MOTION COMPENSATION

INTRA PREDICTION

DETECT MOTION VECTOR

EP 2 339 852 A1

# FIG. 24B

INPUT BIT STREAM → ENTROPY DECODING → DEQUANTIZATION → INVERSE DCT

DEBLOCKING FILTER

INTRA PREDICTION

MOTION COMPENSATION

OUTPUT DECODED PICTURE

EP 2 339 852 A1

# FIG. 25A

BLOCK BOUNDARY

| p₃ | p₂ | p₁ | p₀ | q₀ | q₁ | q₂ | q₃ |

PERFORM FILTERING BY USING 8 PIXELS

4x4 BLOCK

BOUNDARIES TO BE PROCESSED (WHEN TARGET MB IS SELECTED WITH 8x8 BLOCK, ONLY SOLID LINE)

# FIG. 25B

| p₃ |
| p₂ |
| p₁ |
| p₀ |
| q₀ |
| q₁ |
| q₂ |
| q₃ |

BLOCK BOUNDARY

PERFORM FILTERING BY USING 8 PIXELS

## INTERNATIONAL SEARCH REPORT

| International application No. |
| --- |
| PCT/JP2009/005524 |

**A. CLASSIFICATION OF SUBJECT MATTER**
*H04N7/30*(2006.01)i, *H04N7/32*(2006.01)i

According to International Patent Classification (IPC) or to both national classification and IPC

**B. FIELDS SEARCHED**

Minimum documentation searched (classification system followed by classification symbols)
H04N7/30, H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 05-316361 A (Sony Corp.), 26 November 1993 (26.11.1993), entire text; all drawings (Family: none) | 1-10 |
| A | JP 2002-185968 A (Samsung Electronics Co., Ltd.), 28 June 2002 (28.06.2002), entire text; all drawings & US 6370279 B1 & GB 2325583 A & DE 19815861 A & KR 10-0265722 B1 | 1-10 |
| A | JP 2001-320586 A (Sharp Corp.), 16 November 2001 (16.11.2001), entire text; all drawings & US 7203234 B1 & EP 1146748 A2 | 1-10 |

[X] Further documents are listed in the continuation of Box C.    [ ] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 November, 2009 (12.11.09) | 24 November, 2009 (24.11.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

<table>
<tr><td colspan="3" align="center">**INTERNATIONAL SEARCH REPORT**</td><td>International application No.<br>PCT/JP2009/005524</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 05-143726 A  (Canon Inc.),<br>11 June 1993 (11.06.1993),<br>entire text; all drawings<br>(Family: none) | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008271496 A